# EUROPEAN PATENT SPECIFICATION

(11) **EP 3 139 535 B1**
(45) Date of publication and mention of the grant of the patent: **18.07.2018**
(21) Application number: 16184102.8
(22) Date of filing: 12.08.2016
(51) Int. Cl.: H04L 12/18, H04L 29/06, H04M 3/56, H04W 12/06, H04W 12/08

(54) **INFORMATION PROCESSING APPARATUS, COMMUNICATION METHOD, AND COMMUNICATION SYSTEM**
INFORMATIONSVERARBEITUNGSVORRICHTUNG, KOMMUNIKATIONSVERFAHREN UND KOMMUNIKATIONSSYSTEM
SYSTÈME DE COMMUNICATION, APPAREIL DE TRAITEMENT DES INFORMATIONS, SERVEUR ET PROCÉDÉ DE COMMUNICATION

(30) Priority: 18.08.2015 JP 2015161142
(43) Date of publication of application: 08.03.2017
(73) Proprietor: Ricoh Company, Ltd., Tokyo 143-8555 (JP)
(72) Inventor: TORIUMI, Takashi, Tokyo, 143-8555 (JP); UMETSU, Fumihiro, Tokyo, 143-8555 (JP)
(74) Representative: J A Kemp

(56) References cited:
- US-A1- 2007 041 045
- US-A1- 2011 270 922
- US-A1- 2013 170 402

## Description

The present invention relates to an information processing apparatus, a communication method, and a communication system.

There are conference systems in which participants of a conference operate information terminals they each carry to communicate with a server via a network such that conference materials and the like are shared, and the conference is conducted while devices such as a printer, a projector, and an electronic whiteboard are utilized. In the conference system, because the participants can access confidential conference materials, participants are preferably authenticated in the conference system to participate in the conference.

In view of this, there is a conference system that authenticates a participant (see Patent Document 1, for example). Patent Document 1 discloses a server that delivers, to the participants, a mail message to report holding a conference along with attached setting information for participating in the conference including an authentication key. Only if authentication using the authentication key is successful, the server allows an information terminal to connect to a network. In accordance with such a method, only those people that should participate in the conference are allowed to access conference materials and devices.

It is an object of at least one embodiment of the present invention to provide an information processing apparatus capable of preventing an unscheduled participant from participating in a conference.

### Related Art Documents

[Patent Document 1] Japanese Unexamined Patent Application Publication No. 2004-096495

US 2011/270922 A1 discloses systems, methods and computer programs for managing participants in an online conference via a graphical user interface.

According to the present invention there is provided a conference information processing apparatus, a method for communication in a communication system and a communication system as specified in the claims.

According to an embodiment of the present invention, it is possible to provide an information processing apparatus capable of preventing an unscheduled participant from participating in a conference.

Other objects and further features of embodiments will become apparent from the following detailed description when read in conjunction with the accompanying drawings, in which:
FIG. 1A is a diagram schematically illustrating an operation of a communication system according to an embodiment of the present invention;
FIG. 1B is a diagram schematically illustrating an operation of a communication system according to an embodiment of the present invention;
FIG. 2 is a schematic configuration diagram of a communication system according to an embodiment of the present invention;
FIG. 3 is a hardware configuration diagram of a conference managing device according to an embodiment of the present invention;
FIG. 4 is a hardware configuration diagram of a smart device according to an embodiment of the present invention;
FIG. 5 is a hardware configuration diagram of a network connection controlling device according to an embodiment of the present invention;
FIG. 6 is a functional block diagram of a conference managing device, a network connection controlling device, and an information terminal included in a communication system according to an embodiment of the present invention;
FIG. 7 is a sequence diagram depicting a procedure by which a host sends a request to start a conference (issue a passcode) to a conference managing device according to an embodiment of the present invention;
FIG. 8 is a sequence diagram depicting an operation performed by a conference managing device when a participant participates in a conference according to an embodiment of the present invention;
FIG. 9A is a sequence diagram depicting a procedure by which an information terminal is connected to a network connection controlling device according to an embodiment of the present invention;
FIG. 9B is a sequence diagram depicting a procedure by which an information terminal is connected to a network connection controlling device according to an embodiment of the present invention;
FIG. 10 is a sequence diagram depicting a procedure by which, after a participant participates in a conference, a participant list is displayed in an information terminal of a host according to an embodiment of the present invention;
FIG. 11 is a sequence diagram depicting a procedure by which, after a participant participates in a conference, a participant list is displayed in an information terminal of the participant according to an embodiment of the present invention;
FIG. 12 is a diagram depicting initial screens before starting a conference or participating in the conference according to an embodiment of the present invention;
FIG. 13 is a diagram depicting screens displayed after the conference is started according to an embodiment of the present invention;
FIG. 14 is a diagram depicting participant list screens displayed in a smart device when a participant list is transmitted from a conference managing device according to an embodiment of the present invention;
FIG. 15 is a sequence diagram depicting a procedure by which, a participant list is displayed in an information terminal of a participant when participants on a participant information table are changed according to an embodiment of the present invention;
FIG. 16 is a flowchart depicting a procedure from an operation performed by a host to hold a conference until determination of holding a conference according to an embodiment of the present invention;
FIG. 17 is a flowchart depicting a procedure from removal of an unscheduled participant by a host until determination of holding a conference according to an embodiment of the present invention;
FIG. 18 is a flowchart depicting a procedure by which after a conference is held, when a new participant participates in the conference, a host or another participant removes the new participant according to an embodiment of the present invention;
FIG. 19 is a flowchart depicting a procedure by which a conference managing device changes ACL according to an embodiment of the present invention;
FIG. 20 is a functional block diagram of a conference managing device according to an embodiment of the present invention;
FIG. 21 is diagram illustrating a state transition of a communication system according to an embodiment of the present invention;
FIG. 22 is a flowchart depicting a procedure by which a conference managing device manages a nonregistered person information table or the like according to an embodiment of the present invention;
FIG. 23 is a flowchart depicting a procedure by which an information terminal of a participant removes a nonregistered participant according to an embodiment of the present invention;
FIG. 24 is a flowchart depicting a procedure performed by an information terminal of a nonregistered participant according to an embodiment of the present invention;
FIG. 25 is a diagram depicting participant list screens displayed in an information terminal according to an embodiment of the present invention; and
FIG. 26 is a flowchart depicting a procedure by which a conference managing device removes a nonregistered person according to an embodiment of the present invention.

In the following, embodiments of the present invention will be described with reference to the accompanying drawings.

### [Example 1]

### <Schematic operation of communication system in embodiment>

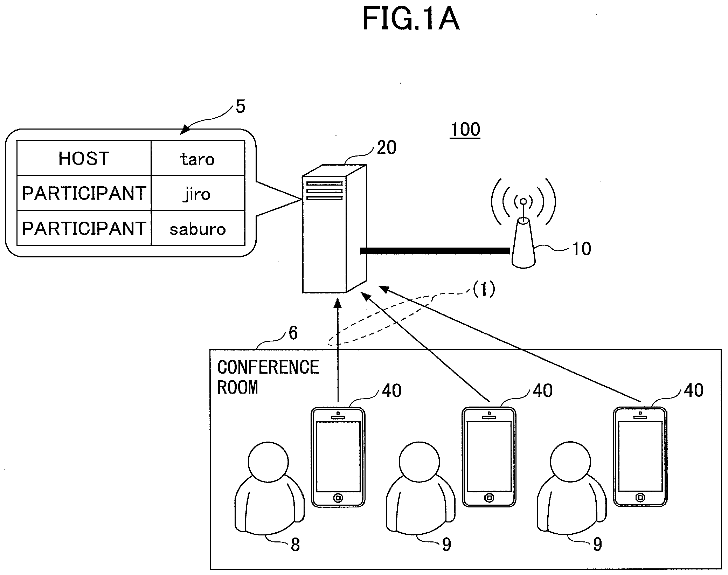

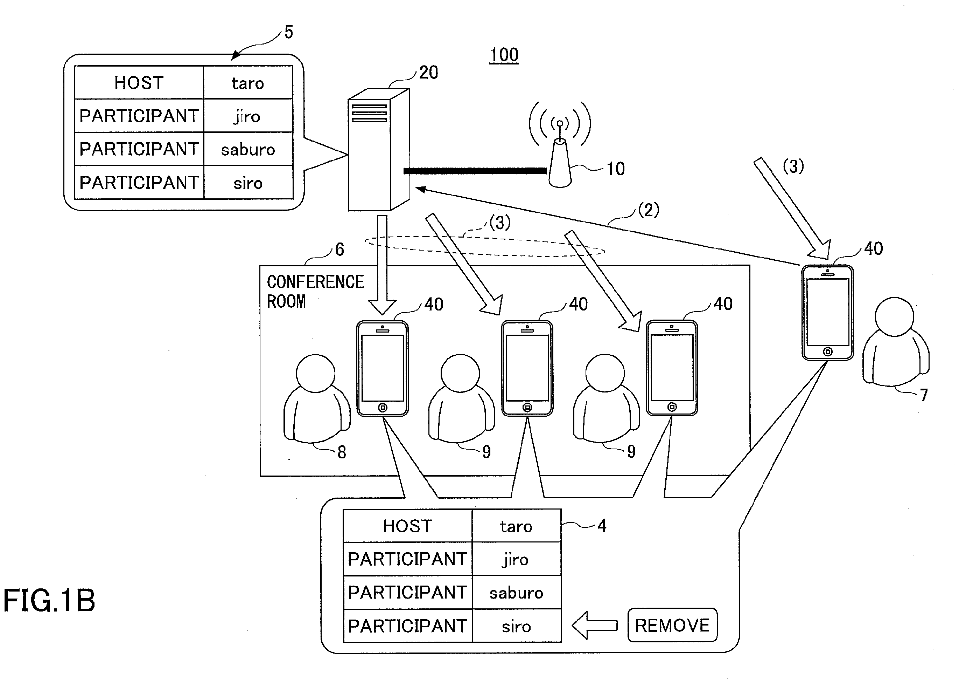

FIGs. 1A and 1B are diagrams illustrating a schematic operation of a communication system 100 according to the embodiment of the present invention. As illustrated in FIG. 1A, a conference is conducted in a conference room 6. One of attendees of the conference is referred to as a host 8 and the others are referred to as participants 9. The host 8 and the participants 9 each carry information terminals 40. The information terminal 40 serves as an operation unit for the host 8 to start the conference and for the host 8 and the participants 9 to browse conference materials or to use a device in the conference room 6.
(1) The information terminal 40 performs wireless communication with a conference managing device 20 directly or via a network connection controlling device 10 and transmits information such as a passcode and a name. In response to authentication of the passcode, participant information 5 is registered in the conference managing device 20.
(2) Next, it is assumed that the passcode is leaked to an unscheduled participant 7, for example. Because radio waves of the network connection controlling device 10 reach beyond the conference room 6, the unscheduled participant 7 is able to participate in the conference. Accordingly, as illustrated in FIG. 1B, participant information about the fourth person is registered in the conference managing device 20.
(3) If the number of the participants 9 is increased, the conference managing device 20 according to the embodiment transmits a participant list 4 to the information terminal 40 of the host 8 and the participants 9. Each information terminal 40 displays the participant list 4 on a display screen thereof. The host 8 and the participants 9 can comprehend that although the number of persons present in the conference room 6 is three, four attendees are registered in the participant list 4. Then either the host 8 or one of the participants 9 performs an operation to remove the fourth participant 9, so that the conference managing device 20 disconnects communication between the information terminal 40 of the unscheduled participant 7 and the conference managing device 20. In accordance with this, it is possible to prevent the unscheduled participant 7 from accessing conference materials or using a device in the conference room 6.

Further, it is also assumed that some of the participants 9 do not carry the information terminal 40, so that the number of attendees that are present in the conference room 6 and the number of attendees on the participant list 4 do not match. Further, in a conference held together with a conference room in another location, not all of participants 9 meet in a face-to-face manner. However, even in this case, names are displayed on the participant list 4, so that the participants 9 can easily comprehend that the unscheduled participant 7 whose name is not known participates in the conference.

As described above, the communication system 100 according to the embodiment can report to the host 8 or the participants 9 that another participant 9 is added, such that the host 8 or one of the participants 9 can forcibly remove the unscheduled participant 7 from the conference. Accordingly, it is possible to ensure security of the conference while realizing the conference in which the information terminal 40 is used to wirelessly access conference materials and a device.

### <As to terms>

In the following, terms used in this embodiment are described.
- Host 8: a person who performs an operation to start a conference. In addition to the starting of the conference, the host 8 can permit participation in the conference, suspend the conference, and remove a participant 9, for example.
- Participant 9: a person who participates in a conference other than the host 8. The participant 9 can remove another participant 9.
- Attendee: the host 8 and the participant 9 are simply called attendees if they are not distinguished.
- Unscheduled participant 7: a person that is not scheduled to participate in the conference. Examples of the unscheduled participant 7 include a person that illegally obtains a passcode or obtains the passcode by accident.
- Location: a place where a participant 9 is present or participants 9 gather. For example, if a conference is held in a single conference room 6, the location corresponds to this conference room 6. If the single conference room 6 cannot accommodate participants 9, each of conference rooms is called a corresponding location. Further, if a conference is held at geographically remote places, each of the geographically remote places is called a corresponding location. If a single conference is held in separate conference rooms, a conference managing device 20 in each of the separate conference rooms performs communication to transmit and receive an image to be projected by a projector 95 or an image to be displayed by an electronic whiteboard 96. Accordingly, attendees of the separate conference rooms can see the same image.
- Starting a conference: registration of a conference such as issuing a passcode.
- Participation: logging into the conference managing device 20 by the information terminal 40 using a passcode.
- Holding a conference: one of operations performed by the host 8. In accordance with this, the information terminal 40 can access conference materials or a device.
- Ending a conference: one of operations performed by the host 8. In accordance with this, the information terminal 40 cannot access conference materials or the device.

### <System configuration>

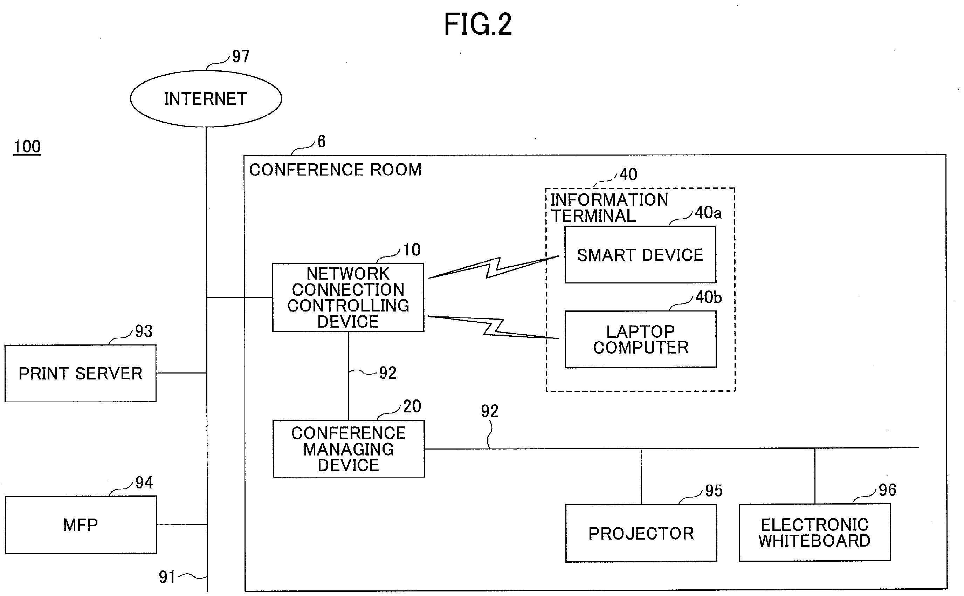

FIG. 2 is a schematic configuration diagram of the communication system 100 according to the embodiment of the present invention. The communication system 100 mainly includes a conference network 92 and a shared network 91. The conference network 92 is built in the conference room 6 and the shared network 91 is built outside the conference room 6 and is connected to the Internet 97, for example. Both of the conference network 92 and the shared network 91 may be a Local Area Network (LAN) but each may further include a plurality of LANs.

A smart device 40a and a laptop computer 40b are examples of the information terminal 40. The information terminal 40 wirelessly communicates with the network connection controlling device 10. The information terminal 40 may have a function of wired communication. The information terminal 40 is used to refer to conference materials or operate a device. Further, the information terminal 40 is used for display of a participant list, a removal operation, and the like.

The information terminal 40 may be the smart device 40a or the laptop computer 40b. These are only examples. The reason for presenting two types of devices as the information terminal 40 is that there are various communication methods installed on the information terminal 40. In this embodiment, the smart device 40a can perform wireless communication in at least two communication methods and the laptop computer 40b can perform wireless communication in one communication method as an example of description.

One communication method of the smart device 40a is a communication method capable of communicating minimum information in a simplified manner while the communication method is not suitable for high-speed communication. Examples of such a communication method include Bluetooth (registered trademark), Near Field Communication (NFC) (registered trademark), Zigbee (registered trademark), and infrared communication. Examples of another communication method of the smart device 40a include a wireless LAN, mobile phone communication, and Worldwide Interoperability for Microwave Access (WiMAX), which are suitable for high-speed communication.

In the following description, it is assumed that the smart device 40a communicates with the conference managing device 20 via an application and the laptop computer 40b communicates with the conference managing device 20 via a browser. This is also for convenience sake of description. The smart device 40a may communicate via a browser or the laptop computer 40b may communicate via an application.

The smart device 40a is a general term of an information processing apparatus configured to be easily portable for a user. The smart device 40a may be a smartphone (multifunction phone terminal) having a phone function, a tablet computer focusing on information processing, or the like. Other examples of the smart device 40a include a wearable terminal (heads-up display, wristwatch terminal, and the like), a mobile phone, a Personal Digital Assistant (PDA), a digital camera, and the like. However, the smart device 40a is not limited to these devices. The laptop computer 40b refers to a small Personal Computer (PC) such as a notebook or a laptop. As described above, the difference between the smart device 40a and the laptop computer 40b is only for convenience sake of description.

A print server 93 and a Multifunction Peripheral/Printer/Product (MFP) 94 connected to the shared network 91 are examples of devices that are frequently used at a conference. The print server 93 and the MFP 94 may be located within the conference room 6.

The projector 95 and the electronic whiteboard 96 connected to the conference network 92 are examples of devices disposed in the conference room 6 and frequently used at a conference. The projector 95 is used by an attendee to project conference materials, for example. The electronic whiteboard 96 is used to display the conference materials or display handwriting information indicating handwriting of the attendee. In addition, a printer, a FAX machine, a copier, or the like may be disposed as a device in the conference room 6. Further, the devices are not necessarily required to hold a conference. The projector 95, the electronic whiteboard 96, and the MFP 94 may simply be referred to as a "device" if not differentiated.

The network connection controlling device 10 has functions of a communication interface and an access point of a wireless LAN for the information terminal 40 to perform wireless communication and a function of a router that controls data exchange between the conference network 92 and the shared network 91. Further, the network connection controlling device 10 has a function of restricting communication with the conference managing device 20 performed by the information terminal 40.

The conference managing device 20 controls the network connection controlling device 10, saves or deletes conference materials, performs input or output to a device, and manages attendees at a conference, for example. Further, the conference managing device 20 has a function of a Web server for the information terminal 40. Specifically, the conference managing device 20 authenticates participants 9 via a passcode, registers participant information, transmits a participant list, receives removal of an unscheduled participant 7, deletes the unscheduled participant 7 from the participant information, and disconnects communication of the information terminal 40 carried by the unscheduled participant 7, for example.

The network connection controlling device 10, the conference managing device 20, the projector 95, and the electronic whiteboard 96 are disposed in a single conference room 6. If there is a plurality of conference rooms 6, the network connection controlling device 10, the conference managing device 20, the projector 95, and the electronic whiteboard 96 are disposed in each conference room 6.

Further, if another conference room 6 is connected via the Internet 97 or the shared network 91, the other conference room 6 and the conference room 6 illustrated in FIG. 2 may belong to the same conference. In this case, information terminals 40 in the two conference rooms 6 can access corresponding conference managing devices 20 and refer to conference materials, for example.

### <Hardware configuration>

### <<Conference managing device 20>>

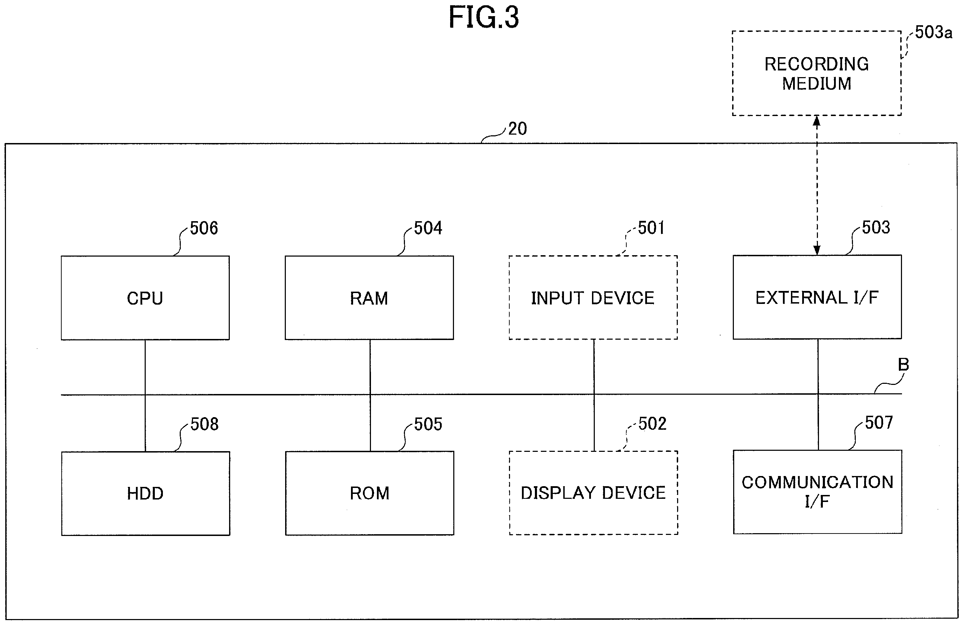

FIG. 3 is a hardware configuration diagram of the conference managing device 20 according to the embodiment of the present invention. The conference managing device 20 includes an input device 501, a display device 502, an external interface (I/F) 503, a RAM 504, a ROM 505, a CPU 506, a communication I/F 507, a Hard Disk Drive (HDD) 508, and the like. These elements are interconnected via a bus B. In addition, the input device 501 and the display device 502 may be connected and used when necessary.

The input device 501 includes a keyboard, a mouse, a touch panel, and the like. The input device 501 is used by the user to input an operation signal. The display device 502 includes a display screen and the like. The display device 502 displays a result of processing performed by the conference managing device 20.

The communication I/F 507 is an interface to connect the conference managing device 20 to various types of networks. In accordance with this, the conference managing device 20 can perform data communication via the communication I/F 507.

The HDD 508 is an example of a non-volatile storage device that stores a program and data. Examples of the program and data to be stored include an Operating System (OS) which is basic software to control all of the conference managing device 20, application software (hereafter simply called "application") that provides various types of functions on the OS, and the like. In addition, the conference managing device 20 may employ a drive device (such as a Solid State Drive (SSD)) using a flash memory as a recording medium instead of the HDD 508.

The external I/F 503 is an interface for an external device. Examples of the external device include a recording medium 503a. In accordance with this, the conference managing device 20 can read from or write into the recording medium 503a via the external I/F 503. Examples of the recording medium 503a include a flexible disk, a CD, a DVD, an SD card, a USB memory, and the like.

The ROM 505 is an example of a non-volatile semiconductor memory (storage device) that can hold a program and data even in a powered-off state. The ROM 505 stores a Basic Input-Output System (BIOS) executed when the conference managing device 20 starts up, OS settings, a program such as network settings, data, and the like. The RAM 504 is an example of a volatile semiconductor memory (storage device) that temporarily holds a program and data.

The CPU 506 is an arithmetic unit that controls all of the conference managing device 20 and implements functions thereof by reading out a program and data from a storage device such as the ROM 505 or the HDD 508 to the RAM 504 and executing a process.

In addition, the hardware configuration of the conference managing device 20 as illustrated in FIG. 3 does not need to be housed in a single case or provided as an integrated device. The hardware configuration indicates hardware elements that are preferably included in the conference managing device 20. Further, the physical configuration of the conference managing device 20 in this example may not be fixed in order to support cloud computing. The conference managing device 20 may be configured by dynamically coupling or disconnecting hardware resources depending on a load.

### «Smart device 40a»

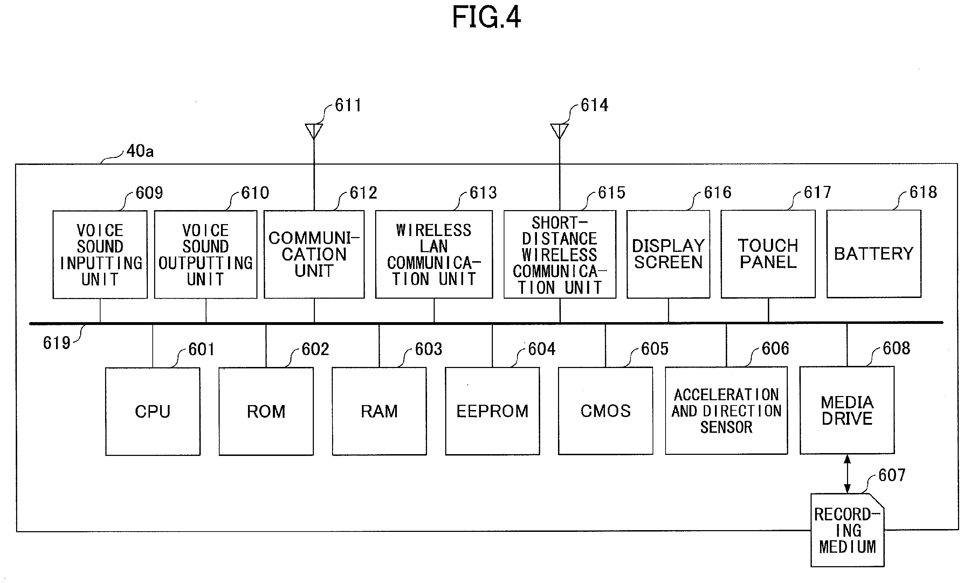

FIG. 4 is a hardware configuration diagram of the smart device 40a according to the embodiment of the present invention. The smart device 40a in FIG. 4 includes a CPU 601, a ROM 602, a RAM 603, an Electrically Erasable Programmable Read-Only Memory (EEPROM) 604, a CMOS sensor 605, an acceleration and direction sensor 606, and a media drive 608.

The CPU 601 controls all of operations of the smart device 40a. The ROM 602 stores a basic input-output program. The RAM 603 is used as a work area of the CPU 601. The EEPROM 604 reads or writes data in accordance with control of the CPU 601. The CMOS sensor 605 captures an image of a photographic subject in accordance with control of the CPU 601 and obtains image data. The acceleration and direction sensor 606 may be an electromagnetic compass that detects geomagnetism, a gyrocompass, an acceleration sensor, or the like.

The media drive 608 controls reading or writing (storing) of data from or into a recording medium 607 such as a flash memory. The media drive 608 is configured to hold the recording medium 607 in a removable manner, in which data already recorded is read out from the recording medium 607 or data is newly written and stored in the recording medium 607.

In addition, the EEPROM 604 stores an OS to be executed by the CPU 601, association information necessary for network settings, and the like. An application to execute various types of processes in the embodiment of the present invention is stored in the EEPROM 604 or the recording medium 607, for example.

Further, the CMOS sensor 605 is a charge-coupled device that converts light into an electric charge and electronically processes an image of a photographic subject. The CMOS sensor 605 may be a Charge Coupled Device (CCD) sensor, for example, as long as an image of the photographic subject can be captured.

Further, the smart device 40a also includes a voice sound inputting unit 609, a voice sound outputting unit 610, an antenna 611, a communication unit 612, a wireless LAN communication unit 613, a short-distance wireless communication antenna 614, a short-distance wireless communication unit 615, a display screen 616, a touch panel 617, and a bus line 619.

The voice sound inputting unit 609 converts voice sound into a voice sound signal. The voice sound outputting unit 610 converts a voice sound signal into voice sound. The communication unit 612 uses the antenna 611 to communicate with the nearest base station device through wireless communication signals. The wireless LAN communication unit 613 performs wireless LAN communication with an access point, the wireless LAN communication being compliant with the IEEE 802.11 standard. The short-distance wireless communication unit 615 uses the short-distance wireless communication antenna 614 to perform short-distance wireless communication.

The display screen 616 includes liquid crystal, organic EL, or the like that displays an image of a photographic subject and various types of icons. The touch panel 617 is placed on the display screen 616 and is configured with a pressure sensitive or electrostatic panel. The touch panel 617 detects a touched location on the display screen 616 in response to touch by the finger, a touch pen, or the like. The bus line 619 may be an address bus, a data bus, or the like that electrically connects the above units.

The smart device 40a includes a dedicated battery 618. The smart device 40a is powered by the battery 618. In addition, the voice sound inputting unit 609 includes a microphone for inputting voice sound. The voice sound outputting unit 610 includes a loudspeaker for outputting voice sound.

The smart device 40a can implement various types of processes to be described later in accordance with the hardware configuration illustrated in FIG. 4, for example. In addition, although hardware of the laptop computer 40b is different from the hardware of the smart device 40a in that the short-distance wireless communication unit 615 is not included, it is assumed that this difference does not have an influence on the description of this embodiment.

### <<Network connection controlling device 10>>

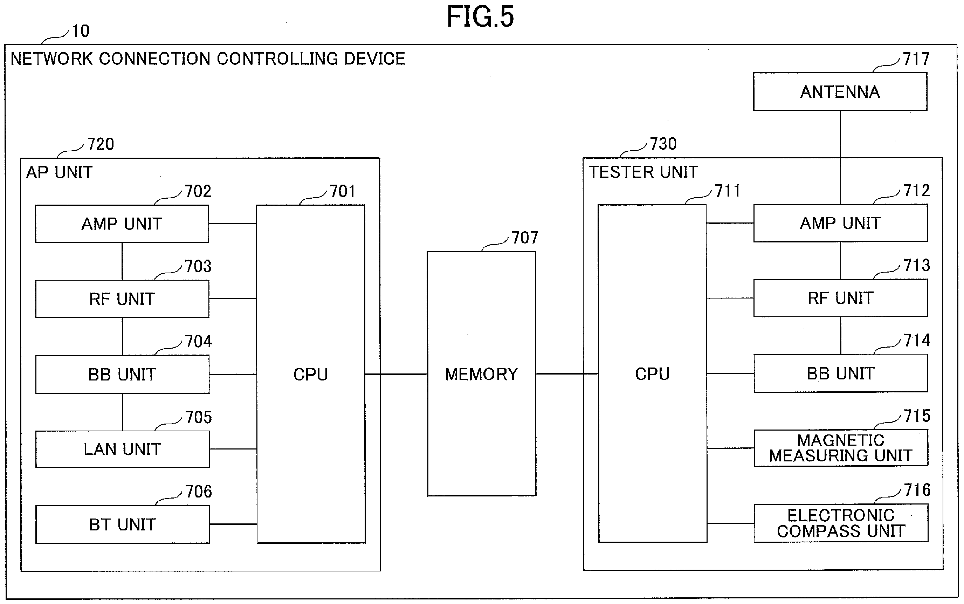

FIG. 5 is a hardware configuration diagram of the network connection controlling device 10 according to the embodiment of the present invention. The network connection controlling device 10 includes an Access Point (AP) unit 720 that controls data communication in a normal mode, a tester unit 730 that measures a radio wave state in a measurement mode, a memory 707 that stores a Media Access Control (MAC) address of the information terminal 40 in communication and other information, and an antenna 717. The measurement mode is a mode for measuring a radio wave state. The normal mode is different from the measurement mode and is a mode for communicating with the information terminal 40.

The AP unit 720 includes an Amplifier (AMP) unit 702, a Radio Frequency (RF) unit 703, a Base Band (BB) unit 704, a LAN unit 705, a Bluetooth (registered trademark) (BT) unit 706, and a CPU 701. The AMP unit 702 amplifies a signal output from the RF unit 703 and communicates with the information terminal 40 via a wireless LAN. Further, the AMP unit 702 receives a signal of the wireless LAN from the information terminal 40, changes a reception level, and outputs the changed signal to the RF unit 703.

The RF unit 703 performs analog-digital conversion on a signal to be transmitted to the information terminal 40 and a signal received from the information terminal 40. The BB unit 704 performs digital signal processing on a signal to be transmitted to the information terminal 40 and a signal received from the information terminal 40.

The LAN unit 705 is connected to the conference network 92 and the shared network 91 in a wired manner and performs data transmission and reception. The CPU 701 controls the AMP unit 702, the RF unit 703, the BB unit 704, the LAN unit 705, and the BT unit 706. The CPU 701 reads or writes data from or into the memory 707, the data being necessary for controlling communication of data with the information terminal 40.

The BT unit 706 communicates with the information terminal 40 (smart device 40a) via Bluetooth and transmits connection information to the information terminal 40 as will be described below. In addition, the BT unit 706 may be disposed outside the network connection controlling device 10. The BT unit 706 may perform communication in either standard, namely, Bluetooth LE or normal Bluetooth. Further, the BT unit 706 may perform communication via NFC, infrared, or the like.

The AP unit 720 includes two sets of hardware (the AMP unit 702, the RF unit 703, and the BB unit 704) to communicate with the information terminal 40 via a wireless LAN. Each set is for one channel of communication. When switching from the measurement mode to the normal mode, the network connection controlling device 10 selects a channel having a better radio wave state. Upon switching, the network connection controlling device 10 performs the channel switching by setting a new channel to be selected for hardware that is not currently used in order to prevent momentary stopping of communication resulting from the channel switching.

For example, it is assumed that the AP unit 720 uses the AMP unit 702, the RF unit 703, and the BB unit 704 to communicate with the information terminal 40 via the wireless LAN and when the mode is switched to the measurement mode, a channel capable of communication is changed. Before returning to the normal mode, the AP unit 720 changes setting to perform communication in a new channel for the AMP unit 702, the RF unit 703, and the BB unit 704 that are not currently used, and then returns to the normal mode.

The tester unit 730 includes an AMP unit 712, an RF unit 713, a BB unit 714, a magnetic measuring unit 715, an electronic compass unit 716, and a CPU 711. The AMP unit 712, the RF unit 713, and the BB unit 714 are disposed as many as the number of areas of the wireless LAN. For example, if there are 18 areas, each of the numbers of the AMP units 712, the RF units 713, and the BB units 714 is 18. Communication in a single area is measured by the AMP unit 712, the RF unit 713, and the BB unit 714.

The AMP unit 712, the RF unit 713, and the BB unit 714 of the tester unit 730 have the same functions as in the AMP unit 702, the RF unit 703, and the BB unit 704 of the AP unit 720, so that a detailed description thereof is omitted.

The magnetic measuring unit 715 measures magnetism. The electronic compass unit 716 detects a direction of geomagnetism if the magnetism measured by the magnetic measuring unit 715 is approximately the same value as the geomagnetism (about 300 nG in proximity to the equator, about 600 nG in proximity to the north pole and the south pole, and about 500 nG in Japan). For example, if the magnetism measured by the magnetic measuring unit 715 is different from the value of the geomagnetism due to an influence of an electronics device located nearby, the electronic compass unit 716 manually receives the direction of a location. The electronic compass unit 716 detects in which direction the network connection controlling device 10 is located relative to the detected geomagnetism or the received direction.

The CPU 711 controls the AMP unit 712, the RF unit 713, the BB unit 714, the magnetic measuring unit 715, and the electronic compass unit 716. The CPU 711 reads or writes data from or into the memory 707, the data being necessary for measuring a location of the information terminal 40, a distance thereto, and the like. The CPU 711 determines whether an operation is performed in the normal mode or the measurement mode via the memory 707 and performs relevant processes.

The memory 707 stores data necessary for processing performed by the CPU 711. Further, the memory 707 has a MAC table in which information about the information terminal 40 is stored.

### <As to functions>

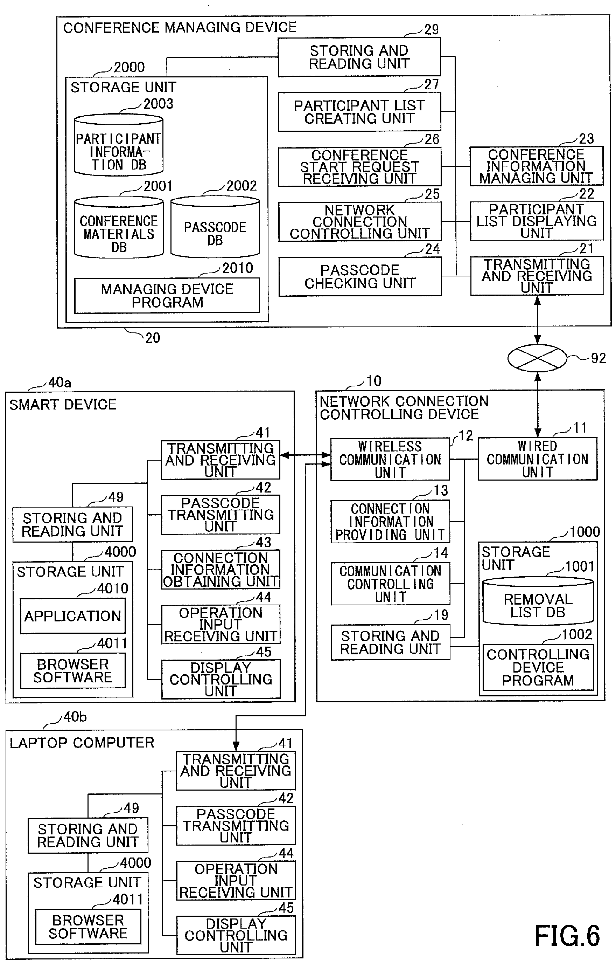

FIG. 6 is a functional block diagram of the conference managing device 20, the network connection controlling device 10, and the information terminal 40 included in the communication system 100 according to the embodiment of the present invention.

### <<Functional configuration of smart device 40a>>

The smart device 40a includes a transmitting and receiving unit 41, a passcode transmitting unit 42, a connection information obtaining unit 43, an operation input receiving unit 44, a display controlling unit 45, and a storing and reading unit 49. These units are functions or units which are implemented or provided when any one of the constituent elements illustrated in FIG. 4 operates in response to an instruction from the CPU 601 in accordance with an application 4010 (or browser software 4011) loaded in the RAM 603 from the EEPROM 604.

Further, the information terminal 40 also includes a storage unit 4000 constructed with the RAM 603, the ROM 602, and the EEPROM 604 illustrated in FIG. 4. The storage unit 4000 stores the application 4010 and the browser software 4011.

The transmitting and receiving unit 41 is implemented by an instruction from the CPU 601, the communication unit 612, the wireless LAN communication unit 613, and the like illustrated in FIG. 4. The transmitting and receiving unit 41 transmits and receives various types of data to and from the conference managing device 20 via the network connection controlling device 10.

The passcode transmitting unit 42 is implemented by an instruction from the CPU 601, the short-distance wireless communication unit 615, and the like illustrated in FIG. 4. The passcode transmitting unit 42 transmits a name, a passcode, and the like to the network connection controlling device 10.

The connection information obtaining unit 43 is implemented by an instruction from the CPU 601, the short-distance wireless communication unit 615, and the like illustrated in FIG. 4. The connection information obtaining unit 43 obtains, from the network connection controlling device 10, connection information to connect with the network connection controlling device 10 and the conference managing device 20.

**[Table 1]**

| | | | |
|---|---|---|---|
| Connection information | AP information | SSID | ABCDEFG |
| | | Encryption method | WEP |
| | | Password | XXXXXXXX |
| | Managing device network information | IP address | 192.168.1.1 |
| | | HTTP port number | 53080 |
| | | HTTPS port number | 530443 |

Table 1 schematically indicates connection information obtained by the connection information obtaining unit 43 from the network connection controlling device 10. The connection information has the "AP information" and the "managing device network information." The AP information is used for the smart device 40a to connect with an access point of the network connection controlling device 10. In other words, the AP information includes an SSID, a password, and the like required when accessing the access point. Further, a cryptographic algorithm supported by the access point is described.

The managing device network information includes an IP address of the conference managing device 20 and port numbers to be used, for example. The smart device 40a can connect with the network connection controlling device 10 and further connect with the conference managing device 20 by using the connection information.

Referring back to FIG. 6 for description, the operation input receiving unit 44 is implemented by an instruction from the CPU 601, the voice sound inputting unit 609, the touch panel 617, and the like illustrated in FIG. 4. The operation input receiving unit 44 receives various types of inputs from the user.

The display controlling unit 45 is implemented by an instruction from the CPU 601, the display screen 616, and the like illustrated in FIG. 4. The display controlling unit 45 causes the display screen 616 to display various types of UI screens in which screen information obtained from the conference managing device 20 is arranged on parts of the UI screens (such as a participant list screen as described later) stored in advance. In addition, when the browser software 4011 operates in the smart device 40a, the display controlling unit 45 interprets the screen information described in HTML, JavaScript (registered trademark), or the like and causes display of the UI screen.

The storing and reading unit 49 is implemented by an instruction from the CPU 601, the RAM 603, the EEPROM 604, and the like illustrated in FIG. 4. The storing and reading unit 49 stores various types of data in the storage unit 4000 and reads out various types of data stored in the storage unit 4000.

### <<Functional configuration of laptop computer 40b>>

The laptop computer 40b includes the transmitting and receiving unit 41, the passcode transmitting unit 42, the operation input receiving unit 44, the display controlling unit 45, and the storing and reading unit 49. These units are functions or units which are implemented or provided when any one of the constituent elements illustrated in FIG. 4 operates in response to an instruction from the CPU 601 in accordance with the browser software 4011 loaded in the RAM 603 from the EEPROM 604.

The transmitting and receiving unit 41 is implemented by an instruction from the CPU 601 and the like illustrated in FIG. 4. The transmitting and receiving unit 41 transmits and receives various types of data to and from the conference managing device 20 by transmitting an HTTP request and receiving an HTTP response, for example.

The passcode transmitting unit 42 is implemented by an instruction from the CPU 601, the wireless LAN communication unit 613, and the like illustrated in FIG. 4. The passcode transmitting unit 42 transmits a name, a passcode, and the like to the network connection controlling device 10.

The operation input receiving unit 44 is implemented by an instruction from the CPU 601, the voice sound inputting unit 609, the touch panel 617, and the like illustrated in FIG. 4. The operation input receiving unit 44 receives various types of inputs into an input field displayed by the browser software 4011.

The display controlling unit 45 is implemented by an instruction from the CPU 601, the display screen 616, and the like illustrated in FIG. 4. The display controlling unit 45 inpterprets HTML data and JavaScript (registered trademark) and causes the display screen 616 to display a UI screen (Web page).

The storing and reading unit 49 is implemented by an instruction from the CPU 601, the RAM 603, the EEPROM 604, and the like illustrated in FIG. 4. The storing and reading unit 49 stores various types of data in the storage unit 4000 and reads out various types of data stored in the storage unit 4000.

### «Functional configuration of network connection controlling device 10»

The network connection controlling device 10 includes a wired communication unit 11, a wireless communication unit 12, a connection information providing unit 13, a communication controlling unit 14, and a storing and reading unit 19. These units are functions or units which are implemented or provided when any one of the constituent elements illustrated in FIG. 5 operates in response to an instruction from the CPU 701 or the CPU 711 in accordance with a controlling device program 1002 stored in the memory 707.

The network connection controlling device 10 also includes a storage unit 1000 constructed with the memory 707 illustrated in FIG. 5. The storage unit 1000 includes a removal list database (DB) 1001 and stores the controlling device program 1002.

**[Table 2]**

| Removed terminal | MAC address |
|---|---|
| Siro | 32:61:3C:4E:B6:05 |

Table 2 indicates an example of a removal list table constituting the removal list DB 1001. In the removal list table, a MAC address of the information terminal 40 of the unscheduled participant 7 that is removed is registered. The network connection controlling device 10 discards a communication request from the MAC address registered in the removal list DB 1001 or does not perform transmission having, as a destination, the MAC address registered in the removal list DB 1001. Further, in addition to the MAC address or instead of the MAC address, information to identify the information terminal 40 such as an IP address may be registered.

### (Functions of network connection controlling device 10)

The wireless communication unit 12 is implemented by an instruction from the CPU 701 or the CPU 711, the AMP unit 702, the RF unit 703, the BB unit 704, and the like illustrated in FIG. 5. The wireless communication unit 12 transmits and receives various types of data to and from the information terminal 40.

The wired communication unit 11 is implemented by an instruction from the CPU 701 or the CPU 711, the LAN unit 705, and the like illustrated in FIG. 5. The wired communication unit 11 transmits and receives various types of data to and from each device (such as the print server 93 or the MFP 94) of the shared network 91 and each device (such as the conference managing device 20) of the conference network 92.

The connection information providing unit 13 is implemented by an instruction from the CPU 701 or the CPU 711, the BT unit 706, and the like illustrated in FIG. 5. The connection information providing unit 13 transmits connection information to the information terminal 40. If the connection information providing unit 13 performs transmission in Bluetooth LE, the network connection controlling device 10 corresponds to a peripheral and the information terminal 40 corresponds to a central. The connection information providing unit 13 periodically transmits an advertisement packet and the information terminal 40 receives the advertisement packet if the information terminal 40 approaches the network connection controlling device 10 within a predetermined distance. In accordance with this, the information terminal 40 detects presence of the connection information providing unit 13 in proximity to itself and the information terminal 40 connects with the network connection controlling device 10. When the information terminal 40 connects with the network connection controlling device 10, the information terminal 40 obtains connection information described in characteristics, for example. In addition, the above predetermined distance is adjusted depending on radio field strength (RSSI). In this embodiment, the predetermined distance is about one meter or less. In accordance with this, only if the information terminal 40 is present in proximity to the network connection controlling device 10, the information terminal 40 can obtain the connection information.

Further, if the connection information providing unit 13 performs transmission in NFC, the information terminal 40 operates as an RF tag reader and reads connection information stored in an NFC tag.

The communication controlling unit 14 is implemented by an instruction from the CPU 701 or the CPU 711 and the like illustrated in FIG. 5. The communication controlling unit 14 restricts communication from the shared network 91 for conference network 92 and restricts communication from the conference network 92 for shared network 91. Further, the communication controlling unit 14 refers to the removal list DB 1001 to restrict a communication request from the information terminal 40 and restrict transmission of various types of data such as conference materials to the information terminal 40.

The storing and reading unit 19 is implemented by an instruction from the CPU 701 or the CPU 711, the memory 707, and the like illustrated in FIG. 5. The storing and reading unit 19 stores various types of data in the storage unit 1000 and reads out various types of data stored in the storage unit 1000.

### <<Functional configuration of conference managing device 20>>

The conference managing device 20 includes a transmitting and receiving unit 21, a participant list displaying unit 22, a conference information managing unit 23, a passcode checking unit 24, a network connection controlling unit 25, a conference start request receiving unit 26, a participant list creating unit 27, and a storing and reading unit 29. These units are functions or units which are implemented or provided when any one of the constituent elements illustrated in FIG. 3 operates in response to an instruction from the CPU 506 in accordance with a managing device program 2010 loaded in the RAM 504 from the HDD 508.

Further, the conference managing device 20 also includes a storage unit 2000 constructed with the RAM 504, the ROM 505, and the HDD 508 illustrated in FIG. 3. The storage unit 2000 includes a conference materials DB 2001, a passcode DB 2002, and a participant information DB 2003, and stores the managing device program 2010.

**[Table 3]**

| Conference ID | Passcode |
|---|---|
| 001 | 0090 |
| 002 | 2335 |

Table 3 indicates an example of a passcode table constituting the passcode DB 2002. In the passcode table, a conference ID and a passcode are registered in an associated manner. The registration of the conference ID and the passcode in the passcode table means that the passcode has been issued for the conference. In addition, an attendee does not need to be aware of the conference ID.

**[Table 4]**

| Conference ID: 001 | Conference name: project A | Conference location: room A | | | | |
|---|---|---|---|---|---|---|
| Name | Passcode | IP address | MAC address | Model number | Phone number | Mail address |
| Taro* | 0090 | 198.168.11.10 | ABCDEF GH | IOS, app | 03-1234-xxxx | ABC@DEF1 .co.jp |
| Jiro | 0090 | 198.168.11.11 | ABCDEF GI | WINOS, browser | 03-1234-xxxx | ABC@DEF2 .co.jp |
| Saburo | 0090 | 198.168.11.12 | ABCDEF GJ | IOS, browser | 03-1234-xxxx | ABC@DEF3 .co.jp |

Table 4 indicates an example of a participant information table constituting the participant information DB 2003. One or more records in the participant information table are referred to as participant information. In the participant information table, participant information about a host 8 and participants 9 that participate in the conference are registered. In addition, even information about the host 8 is also referred to as participant information.

The participant information table is identified by a conference ID. In the participant information table, a conference name and a conference location input by the host 8 are registered. Further, one set of participant information has items of a name, a passcode, an IP address, a MAC address, a model number, a phone number, and a mail address.

The name represents the name of an attendee, a user name, a nickname, or the like. The passcode represents symbols, numerical values, characters, or a combination thereof kept secret to participate in a conference. The passcode is common among attendees for a single conference. The IP address represents an IP address of the information terminal 40 (the IP address may be fixed or assigned by a DHCP server). The MAC address represents an address unique to the information terminal 40 in communication via a wireless LAN. The model number represents information for determining a client program operating on the information terminal 40. For example, an OS name, an application or a browser name, and a version thereof are registered. The model number is mainly referenced by the conference managing device 20 to transmit appropriate screen information. The phone number represents a phone number of the attendee. The mail address represents a mail address of the attendee.

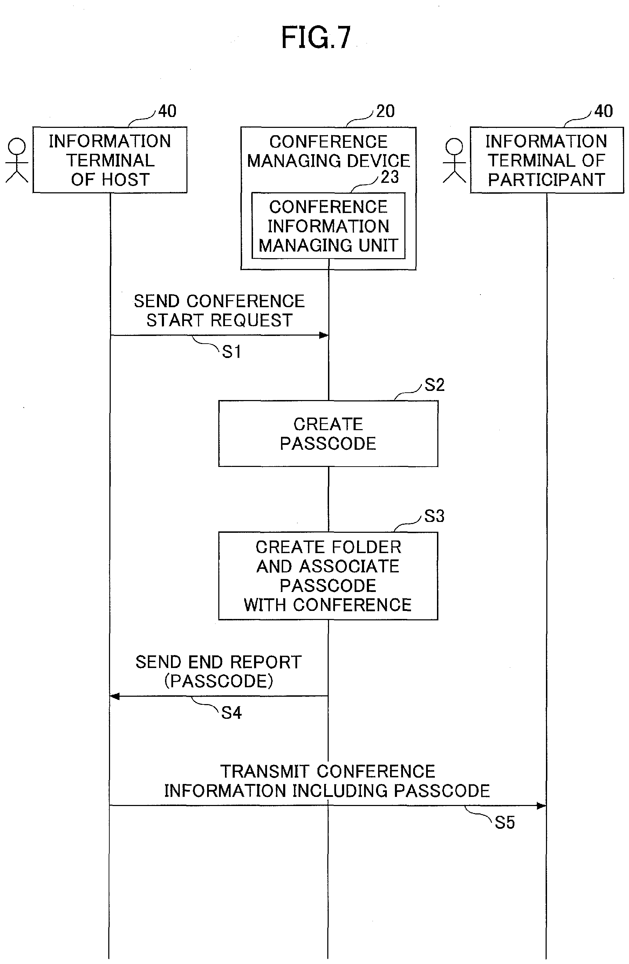

It is not necessary for the conference managing device 20 to obtain all of these items but information for identifying an unscheduled participant 7 may be registered. Further, FIGs. 7 to 10 illustrate a procedure by which the conference managing device 20 obtains the participant information.

In one of the records in the participant information DB 2003, participant information about the host 8 is registered. The host 8 is a person that starts the conference, so that the conference managing device 20 can identify the host 8. Normally, the top record indicates the record of the host 8. In Table 4, the symbol "*" represents the host 8.

**[Table 5]**

| Conference ID | File name | Owner | Path |
|---|---|---|---|
| 001 | 123.ppt | Taro | ¥...¥kaigi1¥ |
| | 234.doc | Jiro | ¥...¥kaigi1¥ |
| | 345.xls | Saburo | ¥...¥kaigi1¥ |

Table 5 indicates an example of a conference materials table constituting the conference materials DB 2001. In the conference materials DB 2001, conference materials that can be referenced by an attendee are registered. Accordingly, in the conference materials table, a conference ID, a file name, an owner, and a path are registered. The file name represents a file name of conference material and the path represents a storage place of a file. The owner represents the name of an attendee that transmitted the file to the conference materials DB 2001. In addition, the conference materials in the conference materials DB 2001 are deleted when a conference ends.

### (Functions of conference managing device 20)

The transmitting and receiving unit 21 is implemented by an instruction from the CPU 506, the communication I/F 507, and the like illustrated in FIG. 3. The transmitting and receiving unit 21 transmits and receives various types of data to and from the network connection controlling device 10, the projector 95, the electronic whiteboard 96, and the like. The transmitting and receiving unit 21 also communicates with the information terminal 40, the print server 93, and the MFP 94 via the network connection controlling device 10.

The conference information managing unit 23 is implemented by an instruction from the CPU 506 and the like illustrated in FIG. 3. The conference information managing unit 23 issues a passcode. Further, if an attendee transmits conference materials, the conference information managing unit 23 registers the conference materials in the conference materials DB 2001. Further, the conference information managing unit 23 manages holding, ending, suspending, and the like of a conference. Further, if an Access Control List (ACL) is set in the participant information DB 2003, the conference information managing unit 23 changes the ACL of the participant information DB 2003. Normally, in a case where it is set in the ACL that only the host 8 can access the participant information DB 2003, if the unscheduled participant 7 participates in resonse to the change of the ACL, a participant 9 can also operate the participant information DB 2003.

The passcode checking unit 24 determines whether a passcode transmitted by a participant to try to participate in a conference matches a passcode registered in the passcode table. If the passcodes match, the passcode checking unit 24 permits participation in the conference.

The participant list creating unit 27 is implemented by an instruction from the CPU 506 and the like illustrated in FIG. 3. The participant list creating unit 27 registers, in the participant information DB 2003, a participant 9 permitted to participate in a conference. Further, the participant list creating unit 27 deletes, from the participant information table, the unscheduled participant 7 removed from the conference.

The participant list displaying unit 22 is implemented by an instruction from the CPU 506 and the like illustrated in FIG. 3. The participant list displaying unit 22 creates screen information about a participant list from the participant information table and transmits the screen information to the information terminal 40 of an attendee. Specifically, the participant list displaying unit 22 refers to the participant information DB 2003 to create the participant list depending on a model number. For example, if the information terminal 40 operates the application 4010, the participant list displaying unit 22 creates screen information about the participant list for the application 4010 and if the information terminal 40 operates the browser software 4011, the participant list displaying unit 22 creates screen information about the participant list for the browser software 4011.

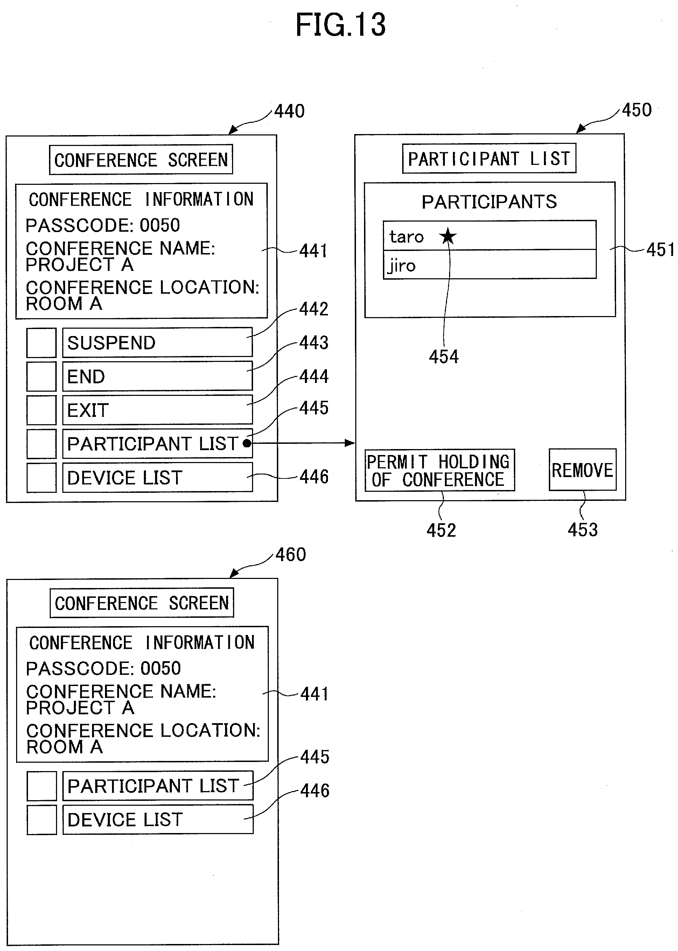

The conference start request receiving unit 26 is implemented by an instruction from the CPU 506 and the like illustrated in FIG. 3. The conference start request receiving unit 26 receives, from the information terminal 40 of the host 8, that a conference holding permitting button 452 is pressed in FIG. 13. In accordance with this, a conference starts.

The network connection controlling unit 25 sends, to the network connection controlling device 10, a request for allowing the information terminal 40 of an attendee registered in the participant information table to perform wireless communication (wireless LAN, mainly) with the network connection controlling device 10. Further, if a removal button is operated, the network connection controlling unit 25 transmits, to the network connection controlling device 10, participant information about an unscheduled participant 7 that is removed along with a disconnection request. In accordance with this, the network connection controlling device 10 registers the MAC address of the information terminal 40 of the unscheduled participant 7 in the removal list DB 1001.

The storing and reading unit 29 is implemented by the CPU 506, the HDD 508, the RAM 504, the ROM 505, and the like illustrated in FIG. 3. The storing and reading unit 29 stores various types of data in the storage unit 2000 and reads out various types of data stored in the storage unit 2000.

### <Operation procedure>

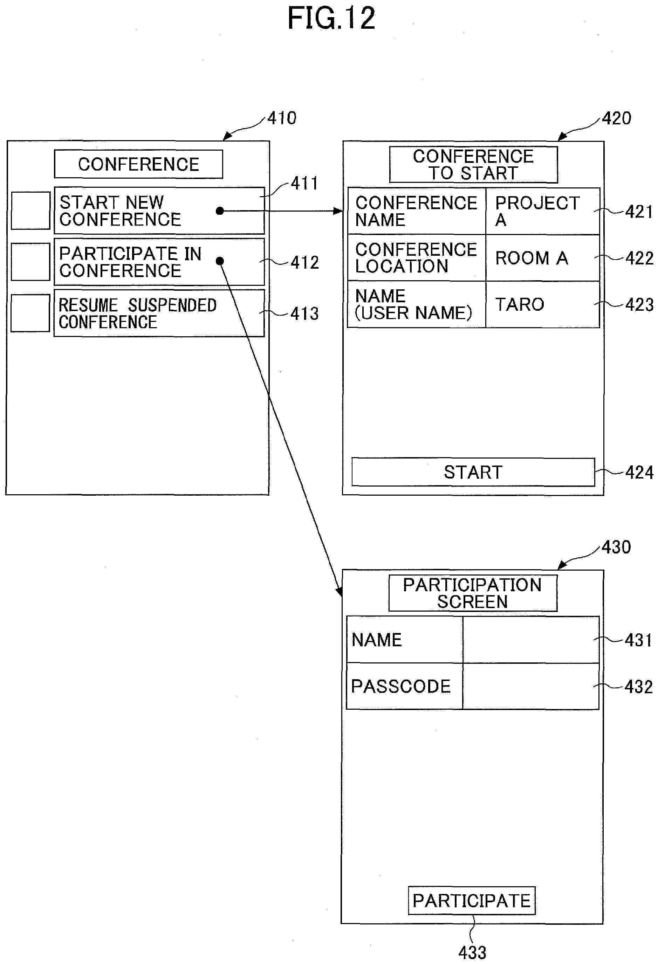

In the following, an operation when the communication system 100 holds a conference is described with reference to FIGs. 7 to 11. In this example, terms of starting of a conference and holding of a conference are used to mean different operations. Further, FIGs. 12 to 14 are diagrams depicting screens displayed on the display screen 616 of the smart device 40a and are referenced where necessary in the following description.

### <<Starting of conference>>

FIG. 7 is a sequence diagram depicting a procedure by which the host 8 sends a request to start a conference (issue a passcode) to the conference managing device 20 according to the embodiment of the present invention. The host 8 accesses the conference managing device 20 in the conference room 6 or in proximity to the conference room 6.
S1: The host 8 operates the information terminal 40 to send a request for a conference start (request to start communication) to the conference managing device 20. On an initial screen 410 of FIG. 12, the host 8 presses a button 411 to newly start a conference and inputs conference information on a conference information inputting screen 420 of FIG. 12. When a start button 424 is pressed, the conference information is transmitted. The conference information may include information about conference date and time other than illustrated items.
S2: The transmitting and receiving unit 21 of the conference managing device 20 receives the request for a conference start and the conference information managing unit 23 assigns a conference ID and creates a passcode.
S3: The conference information managing unit 23 creates a folder, for example, where conference materials are stored, and registers the conference ID and the passcode in the passcode DB 2002. Further, the participant list creating unit 27 creates the participant information table in the participant information DB 2003 and registers records of the host 8 in participant information table.
S4: Then the conference information managing unit 23 transmits a report of an end of the conference start to the information terminal 40 of the host 8. The report includes at least the passcode.
S5: When the report of an end of registration is received, the host 8 transmits a report of holding of the conference including the passcode to participants 9 via electronic mail, for example. If the participant 9 is present nearby, the host 8 may orally report the passcode. The report of holding of the conference may include a conference name, a conference location, conference date and time, and the like. In addition, the conference managing device 20 may directly transmit the report of holding of the conference to the participants 9.

### <<Participation of participant>>

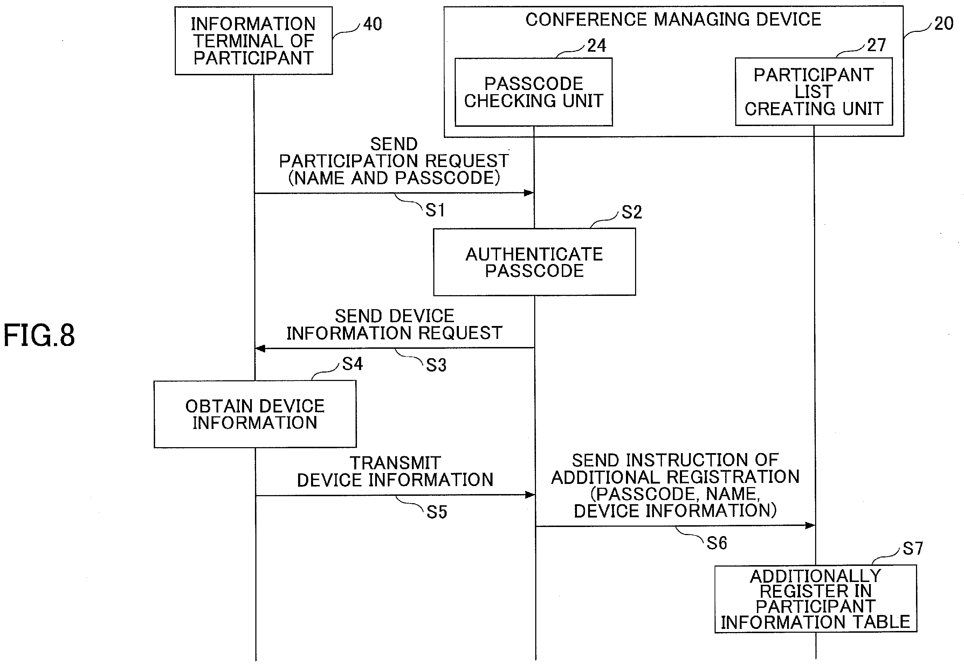

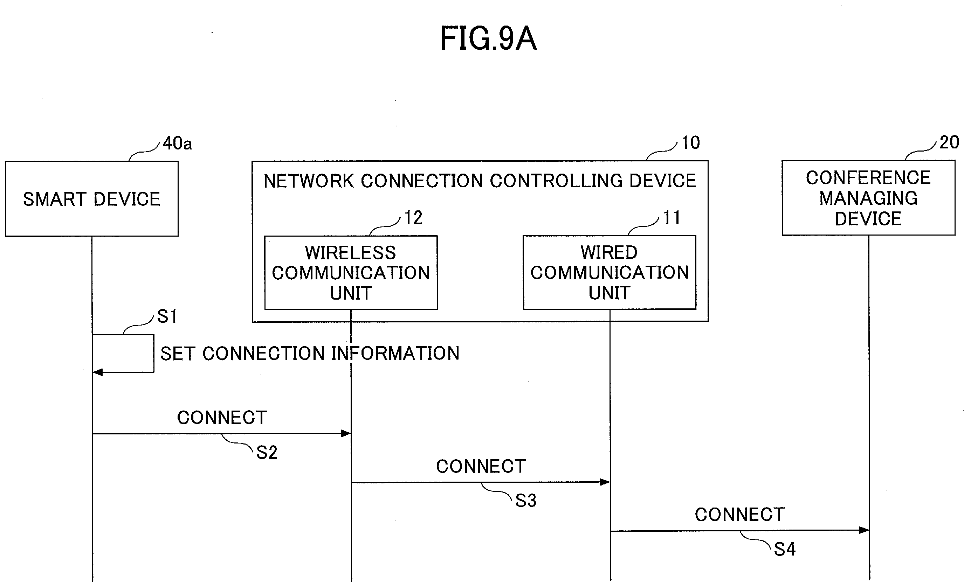

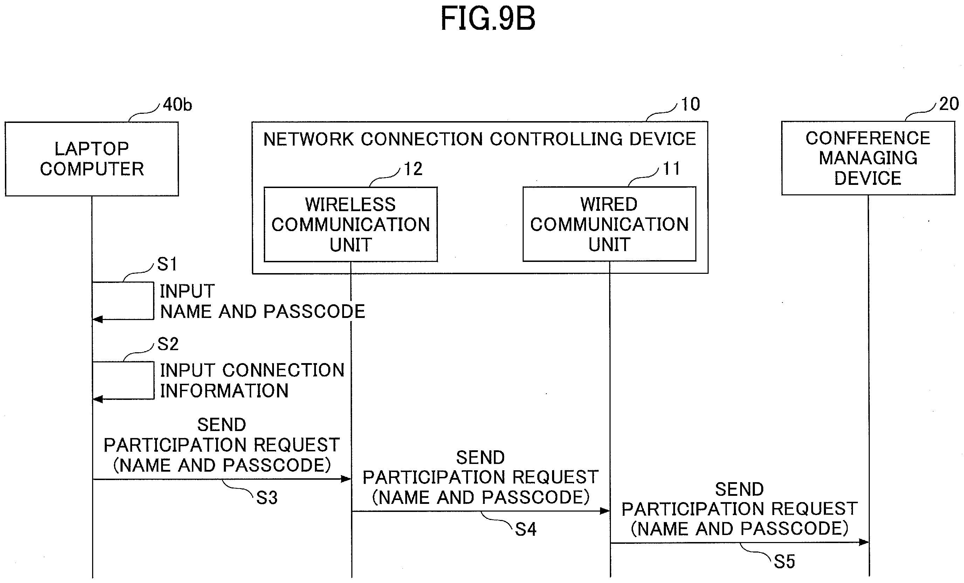

FIG. 8 is a sequence diagram depicting an operation performed by the conference managing device 20 when a participant 9 participates in a conference according to the embodiment of the present invention. In FIG. 8, it is assumed that the information terminal 40 is a smart device 40a. A case where the information terminal 40 is a laptop computer 40b will be described later.
S1: The passcode transmitting unit 42 of the information terminal 40 sends a request to participate in the conference by transmitting its own name and the passcode transmitted by the host 8 to the conference managing device 20 via the network connection controlling device 10. The participant 9 sets the name and the passcode in the information terminal 40 in advance. The passcode transmitting unit 42 may directly transmit the name and the passcode to the conference managing device 20 without using the network connection controlling device 10. In the case of the smart device 40a, the smart device 40a transmits, via Bluetooth communication or the like, the name and the passcode to the network connection controlling device 10 upon approaching the network connection controlling device 10 within a predetermined distance. However, the name and the passcode may be transmitted from a screen such as a participation screen 430 depicted in FIG. 12. Further, along with the transmission of the name and the passcode, the connection information obtaining unit 43 of the smart device 40a obtains connection information.
S2: When the name of the participant 9 and the passcode are received, the passcode checking unit 24 of the conference managing device 20 authenticates the passcode associated with a conference ID in the passcode DB 2002 (authentication step). Alternatively, the passcode may be authenticated using a passcode of the host 8 in the participant information table. In both cases, whether a corresponding passcode is present is determined.
S3: If there is a corresponding passcode, the passcode checking unit 24 sends a request for device information to the information terminal 40. The device information includes an IP address, a MAC address, a model number, a phone number of the user (information terminal 40), a mail address registered in the information terminal 40, and the like. In addition, the device information may be obtained after communication via a wireless LAN is established as illustrated in FIGs. 9A and 9B.
S4: The storing and reading unit 49 of the information terminal 40 obtains the device information from the storage unit 4000. One method for obtaining the device information assigned to its own device is to use an Application Programming Interface (API) that obtains the device information, for example. The storing and reading unit 49 uses the API to obtain the device information.
S5: The transmitting and receiving unit 41 of the information terminal 40 transmits the device information to the conference managing device 20.
S6: When the device information is received, the passcode checking unit 24 of the conference managing device 20 sends an instruction of additional registration to the participant list creating unit 27. The instruction of additional registration includes the passcode and the name received in step S1 in addition to the device information.
S7: The participant list creating unit 27 of the conference managing device 20 uses the passcode to identify the participant information table in which the host 8 is registered and additionally registers the name of the participant 9 permitted to participate, the passcode, and the device information in the participant information table of the conference (information storing step). In this manner, participant information about each participant is registered in the participant information table.

After the holding of the conference described later, if the participant registered in the participant information DB 2003 sends, to the conference managing device 20, a request to access a device or the conference materials DB 2001, the conference managing device 20 refers to the participant information DB 2003 and permits the access to the device or the conference materials DB 2001, for example.

### <<Connection to network connection controlling device 10>>

FIG. 9A is a sequence diagram depicting a procedure by which the smart device 40a is connected to the network connection controlling device 10 according to the embodiment of the present invention.
S1: In the case of the smart device 40a, the authentication using the passcode has been finished and the connection information has been obtained. Accordingly, the connection information is set in its own device.
S2: The transmitting and receiving unit 41 of the smart device 40a connects with the wireless communication unit 12 of the network connection controlling device 10.
S3: The wireless communication unit 12 of the network connection controlling device 10 sends a request for connection to the wired communication unit 11.
S4: The wired communication unit 11 of the network connection controlling device 10 connects with the conference managing device 20 by using the IP address or the like (connection information) specified by the smart device 40a.

FIG. 9B is a sequence diagram depicting a procedure by which the laptop computer 40b is connected to the network connection controlling device 10 according to the embodiment of the present invention.
S1: In a case of the laptop computer 40b without the short-distance wireless communication unit 615, the participant 9 inputs the name and the passcode.
S2: The participant 9 also inputs the connection information. Paper in which the connection information is described may be handed out to participants 9 that use the conference room 6 or such paper may be put up in the conference room 6. In addition, the connection information to be set in this case may only include AP information. When the laptop computer 40b accesses the network connection controlling device 10 by using the AP information, the network connection controlling device 10 redirects the laptop computer 40b to the conference managing device 20.
S3: In the same manner as in step S1 in FIG. 8, the passcode transmitting unit 42 of the laptop computer 40b transmits a participation request to the network connection controlling device 10 (communicates the participation request to the conference managing device 20 as a destination through the redirection).
S4: The wireless communication unit 12 of the network connection controlling device 10 sends the participation request to the wired communication unit 11.
S5: The wired communication unit 11 of the network connection controlling device 10 transmits the participation request to the conference managing device 20. Processes that follow this are the same as the processes from S2 in FIG. 8.

### <<Permission to hold conference>>

The host 8 confirms a state of participation and holds a conference. It is possible to hold the conference even if there is no participant 9.

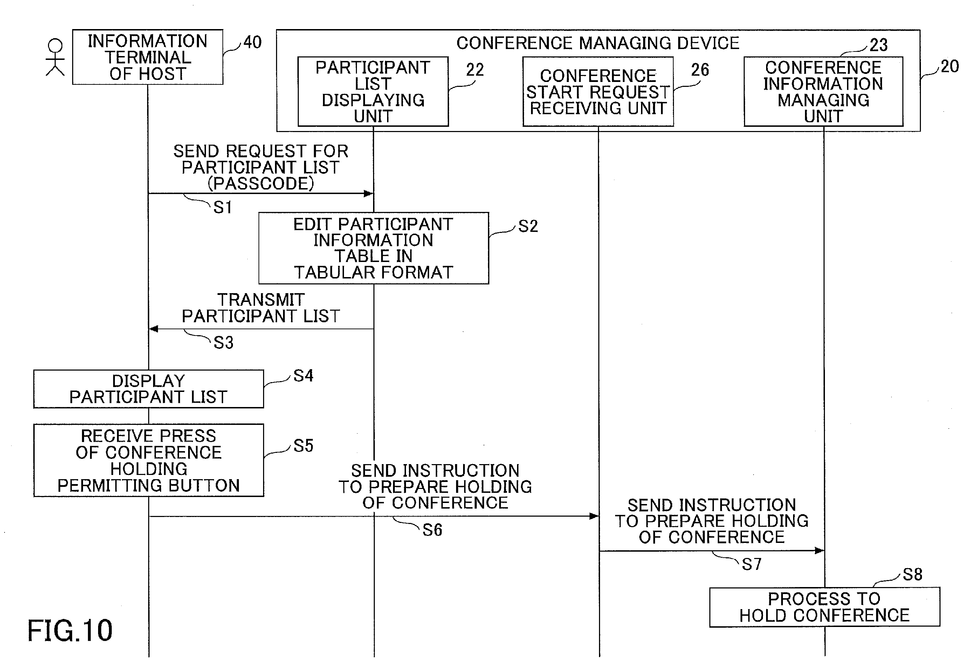

FIG. 10 is a sequence diagram depicting a procedure by which, after the participant 9 participates in the conference, a participant list is displayed in the information terminal 40 of the host 8 according to the embodiment of the present invention.
S1: The host 8 operates the information terminal 40 to send a request for a participant list to the conference managing device 20. Specifically, in a conference screen 440 of FIG. 13 displayed after the starting of the conference, a participant list button 445 is pressed. In addition, the conference screen 440 of FIG. 13 is transitioned from the conference information inputting screen 420 of FIG. 12. Further, the information terminal 40 of the host 8 transmits the passcode or the conference ID to identify the conference.
S2: The participant list displaying unit 22 of the conference managing device 20 uses the passcode or the conference ID to identify the participant information table and edits the identified participant information table in a tabular format to create screen information. In addition, the participant list displaying unit 22 creates appropriate screen information based on the model number of the information terminal 40 of the host 8. In other words, the appropriate screen information is created depending on a combination of an OS and an application or a combination of the OS and a browser. For example, the participant list displaying unit 22 creates the screen information for which description that can be interpreted by the application or the browser is selected and the size of the installed display screen 616 is considered.
S3: The participant list displaying unit 22 of the conference managing device 20 transmits the created screen information about the participant list to the information terminal 40 of the host 8 (transmission step).
S4: The display controlling unit 45 of the information terminal 40 displays the participant list on the display screen 616. On the display screen 616 of the information terminal 40 of the host 8, a participant list screen 450 as illustrated in FIG. 13 is displayed. The host 8 can confirm the participants on the participant list screen 450.
S5: The operation input receiving unit 44 of the information terminal 40 receives an operation of the host 8. In other words, if the host 8 confirms that persons that should participate in the conference are listed, the host 8 determines that it is possible to hold the conference and presses a conference holding permitting button 452 on the participant list screen 450 of FIG. 13. The operation input receiving unit 44 receives the press of the conference holding permitting button 452. The information terminal 40 may determine that there is at least one participant and hold the conference.
S6: When the conference holding permitting button 452 is pressed, the transmitting and receiving unit 41 of the information terminal 40 transmits an instruction to prepare holding of the conference to the conference start request receiving unit 26 of the conference managing device 20.
S7: When the conference start request receiving unit 26 of the conference managing device 20 receives the instruction to prepare holding of the conference, the conference start request receiving unit 26 sends the instruction to prepare holding of the conference to the conference information managing unit 23.
S8: When the conference information managing unit 23 of the conference managing device 20 receives the instruction to prepare holding of the conference, the conference information managing unit 23 performs a process necessary to hold the conference. Examples of the process necessary to hold the conference include permission of access to the folder of the conference materials to be used in the conference, permission of communication with a device, and the like.

### <<Removal process>>

In the following, a case where a participant adding report is transmitted to the participant 9 is described.

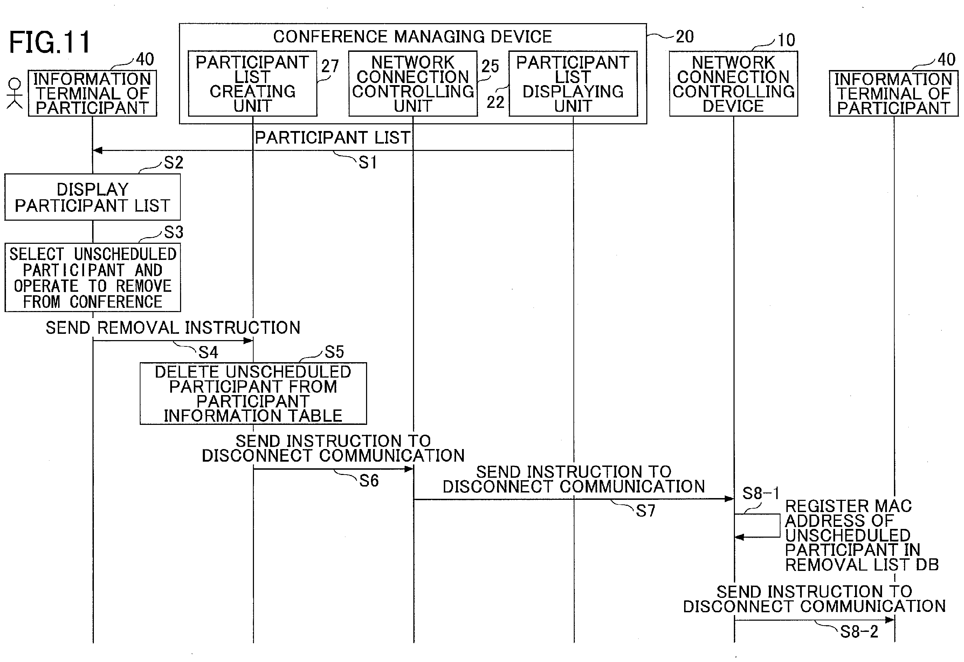

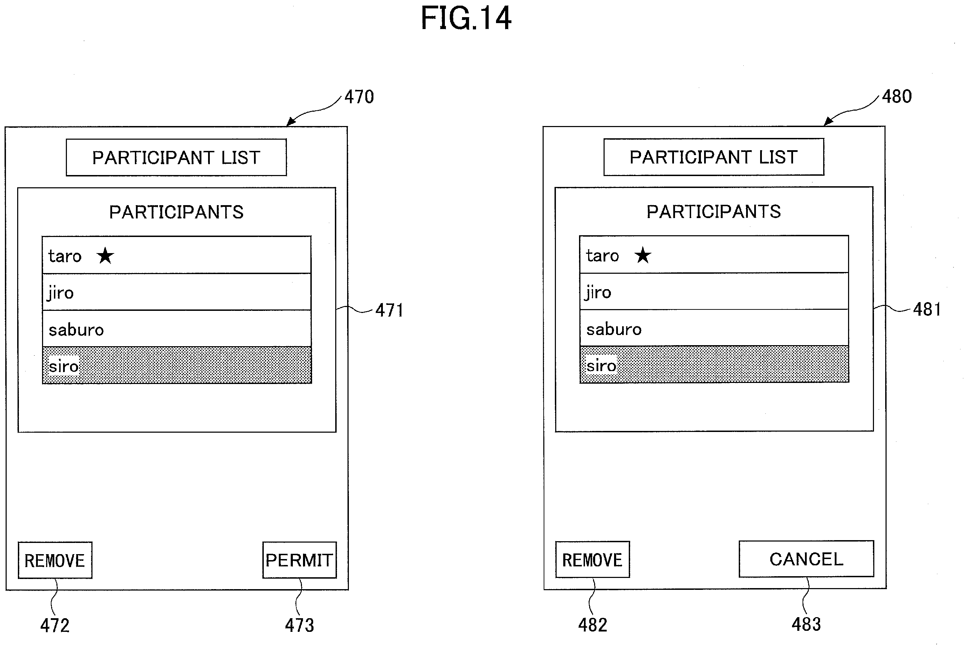

FIG. 11 is a sequence diagram depicting a procedure by which, after the participant 9 participates in the conference, the participant list is displayed in the information terminal 40 of the participant 9 according to the embodiment of the present invention.
S1: In the same manner as in FIG. 10, the participant 9 operates a conference screen 460 as illustrated in FIG. 13 to send a request for a participant list to the conference managing device 20. The conference screen 460 in FIG. 13 is displayed upon participating in a conference, for example. Alternatively, the participant list may be transmitted (push service) when the participant information table is changed (the number of participants is increased, for example) using periodic communication between the transmitting and receiving unit 41 of the information terminal 40 of the participant 9 with the conference managing device 20. In this manner, the participant list displaying unit 22 transmits the participant list to the information terminal 40 of the participant 9.
S2: The display controlling unit 45 of the information terminal 40 displays the participant list on the display screen 616. On the display screen 616 of the information terminal 40 of the participant 9, a participant list screen 480 as illustrated in FIG. 14 is displayed. The participant 9 can confirm the participants on the participant list screen 480.
S3: The operation input receiving unit 44 of the information terminal 40 receives the operation of the participant 9. In other words, the participant 9 selects an unscheduled participant 7 from the participant list and performs an operation to remove the unscheduled participant 7 from the conference. Specificallly, the the participant 9 selects one of the participants 9 on the participant list screen 480 of FIG. 14 and presses a remove button 482. The operation input receiving unit 44 receives the press of the remove button 482.
S4: The transmitting and receiving unit 41 of the information terminal 40 transmits a removal instruction to the participant list creating unit 27 of the conference managing device 20. The removal instruction includes a name or the like to specify the participant 9 and may additionally indlude information (such as IP address or MAC address) to identify the participant 9. Further, the participant 9 may be specified using a unique attendee ID. Further, if information about the participant 9 (such as a mail address) is held in advance, the held information may be transmitted instead of the information selected on the participant list screen.
S5: When the participant list creating unit 27 of the conference managing device 20 receives the removal instruction, the participant list creating unit 27 deletes information about the unscheduled participant 7 removed from the participant information table.
S6: Then, the participant list creating unit 27 sends, to the network connection controlling unit 25, an instruction to disconnect communication of the information terminal 40 carried by the unscheduled participant 7.
S7: The network connection controlling unit 25 transmits the instruction to disconnect communication to the network connection controlling device 10. The instruction to disconnect communication includes the MAC address of the unscheduled participant 7.

One of or both of the following steps S8-1 and S8-2 may be performed.
S8-1: The communication controlling unit 14 of the network connection controlling device 10 registers the MAC address of the unscheduled participant 7 in the removal list DB 1001 (communication restriction step). In accordance with this, the communication controlling unit 14 restricts communication performed by the information terminal 40 of the unscheduled participant 7, so that it is possible to prevent the unscheduled participant 7 from participating in the conference.
S8-2: Further, the restriction of communication may be performed by the information terminal 40. The communication controlling unit 14 transmits a request to disconnect communication to the information terminal 40 (communication restriction step). This case also uses the periodic communication between the transmitting and receiving unit 41 of the information terminal 40 of the participant 9 with the conference managing device 20. In step S8-2, the information terminal 40 carried by the unscheduled participant 7 does not perform communication with the conference managing device 20. In accordance with the disconnection of communication in this manner, the unscheduled participant 7 cannnot access conference materials, so that the unscheduled participant 7 is substantively removed from the conference.

### <Screen examples>

In FIG. 12, the initial screen 410 indicates a screen before the conference start. Specifically, in FIG. 12, the initial screen 410 is rendered on the display screen 616 of the smart device 40a. The laptop computer 40b can display the initial screen 410 in the same manner with a different layout.

The initial screen 410 of FIG. 12 has the button 411 to newly start a conference, a button 412 to participate in a conference, and a button 413 to resume a suspended conference. If the host 8 starts a conference, the host 8 presses the button 411 to newly start the conference. If a participant 9 participates in the conference, the participant 9 presses the button 412 to participate in the conference.

In FIG. 12, the conference information inputting screen 420 is displayed when the button 411 to newly start the conference is selected. The conference information inputting screen 420 has a conference name field 421, a conference location field 422, and a name field 423. The host 8 inputs a conference name into the conference name field 421, a conference location (such as the name of a conference room) into the conference location field 422, and the name of the host 8 into the name field 423 and then presses the start button 424.

In FIG. 12, the participation screen 430 is displayed when the button 412 to participate in the conference is selected. As described above, in the case of the smart device 40a, it is possible to transmit a name and a passcode upon obtaining connection information without such a screen. The participation screen 430 has a name field 431 and a passcode field 432. The participant 9 inputs the name of the participant 9 into the name field 431 and the passcode into the passcode field 432 and then presses a participation button 433.

FIG. 13 is a diagram depicting screens displayed after the conference start. In FIG. 13, the conference screen 440 is displayed on the smart device 40a of the host 8. The conference screen 440 is transitioned from the conference information inputting screen 420 of FIG. 12. The conference screen 440 of the host 8 has a conference information field 441, a suspension button 442, an end button 443, an exit button 444, the participant list button 445, and a device list button 446. In the conference information field 441, in addition to the information input by the host 8 on the conference information inputting screen 420, the passcode issued by the conference managing device 20 is displayed.

In FIG. 13, the participant list screen 450 is displayed on the smart device 40a of the host 8 when the host 8 presses the participant list button 445. The names of participants 9 are displayed in a list on the participant list screen 450 of the smart device 40a of the host 8. In FIG. 13, the participant list screen 450 depicts a state where the host 8 and one participant 9 are listed. The host 8 is displayed with a host mark 454.

The participant list screen 450 displayed on the information terminal 40 of the host 8 has the conference holding permitting button 452 and a remove button 453. The conference holding permitting button 452 is for permitting holding of the conference. In accordance with this, an attendee can access conference materials and the like. The remove button 453 is a button for forcibly removing a participant 9. The removed participant 9 is registered in the removal list DB 1001 and cannot access conference materials or the like.

In FIG. 13, the conference screen 460 is displayed on the smart device 40a of the participant 9. The conference screen 460 is displayed in accordance with authentication via the passcode or transitioned from the participation screen 430 of FIG. 12. The conference screen 460 displayed on the information terminal 40 of the participant 9 has the participant list button 445 allowed for the participant to operate and the device list button 446.

FIG. 14 is a diagram depicting participant list screens displayed in the smart device 40a when a participant list is transmitted from the conference managing device 20 according to the embodiment of the present invention. In FIG. 14, a participant list screen 470 is displayed in the smart device 40a of the host 8. The participant list screen 470 of FIG. 14 is displayed when the participant list button 445 is pressed again in the conference screen 440 of FIG. 13 after the conference holding permitting button 452 is pressed in the participant list screen 450 of FIG. 13.

On the participant list screen 470, in addition to a participant list field 471, a remove button 472 and a permit button 473 are displayed. The permit button 473 is for permitting participation in a conference. When the permit button 473 is pressed, the participants 9 can access conference materials. By contrast, if a participant 9 is to be removed, the host 8 selects (highlights) the participant 9 to remove and presses the remove button 472.

In FIG. 14, the participant list screen 480 is displayed in the smart device 40a of the participant 9. The participant list screen 480 is displayed when the participant list button 445 is pressed in the conference screen 460 of FIG. 13.

The participant list screen 480 of FIG. 14 includes a participant list field 481, the remove button 482, and a cancel button 483. The participant 9 can remove the unscheduled participant 7 in the same manner as the host 8 by pressing the remove button 482. In the participant list screen 480 of FIG. 14, the cancel button 483 is displayed instead of the permit button 473. The cancel button 483 is for enabling the participant 9 to confirm that another participant 9 may not be removed.

In addition, while only the names of the participants 9 are displayed in FIG. 14, the information terminal 40 can display all pieces of information registered in the participant information table. As information to display is increased, the participants 9 are more likely to determine the unscheduled participant 7. Specifically, if the unscheduled participant 7 owns a laptop computer 40b whose model number is not seen very often, it is possible to determine the unscheduled participant 7 from the model number. Further, in many cases, it is possible to identify a person from the phone number or a mail address of the information terminal 40.

### <<Another example of transmission of participant list>>

In addition to the obtainment of the participant list by operating the conference screen 460 as described with reference to FIG. 11, the participant 9 can obtain the participant list when participants in the participant information table are changed.

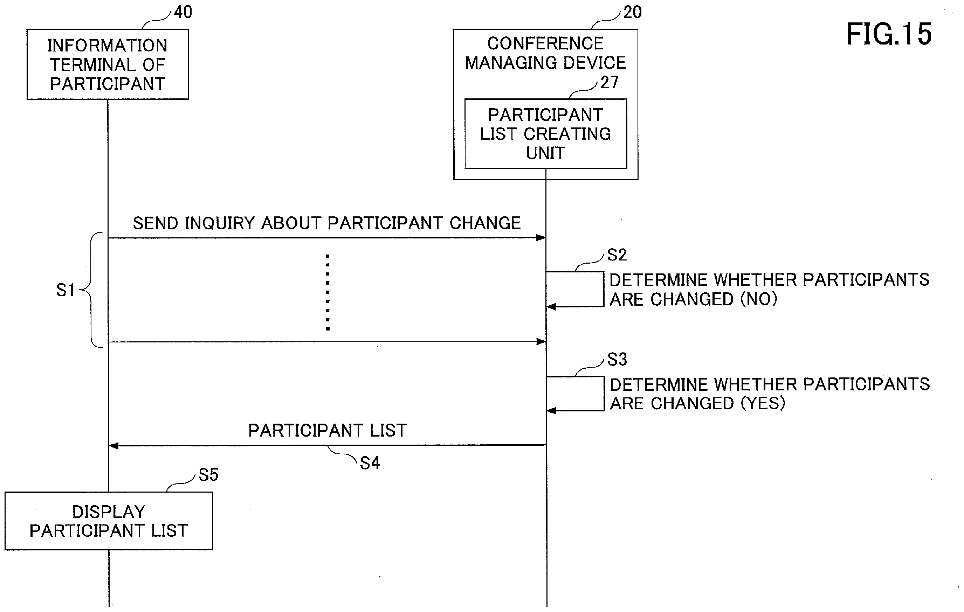

FIG. 15 is a sequence diagram depicting a procedure by which, the participant list is displayed in the information terminal 40 of the participant 9 when participants in the participant information table are changed according to the embodiment of the present invention.
S1: The information terminal 40 of the participant 9 periodically transmits an inquiry about a change of participants to the conference managing device 20. The inquiry about the change of participants is for asking the conference managing device 20 whether there is an increase or decrease of the participants.
S2: The transmitting and receiving unit 21 of the conference managing device 20 receives the inquiry about the change of participants and the participant list creating unit 27 determines whether there is a change between participants in a previous inquiry and the current participants. For example, the participant list creating unit 27 stores a copy of the participant information table in the storage unit 2000 for each inquiry about the change of participants and compares the copy with the participant information table of the participant information DB 2003 when the next inquiry about the change of participants is obtained. If the participants are not increased or decreased (NO in step S2), the copied participant information table corresponds to the participant information table of the participant information DB 2003, so that the participant list creating unit 27 performs nothing.
S3: The participant list creating unit 27 of the conference managing device 20 determines whether the participants have changed each time the transmitting and receiving unit 21 receives the inquiry about the change of participants.
S4: If the participants have increased or decreased as a result of the comparison (YES in step S3), the participant list creating unit 27 transmits the participant list to the information terminal 40 of the participant 9 (transmission step).
S5: The display controlling unit 45 of the information terminal 40 displays the participant list on the display screen 616. On the display screen 616 of the information terminal 40 of the participant 9, the participant list screen 480 as illustrated in FIG. 14 is displayed. Accordingly, even if the participant 9 does not perform an operation to display the participant list, it is possible to display the participant list. Subsequent processes are the same as from step S3 in FIG. 11.

In addition, in step S4 of FIG. 15, the participant list creating unit 27 may transmit the participant list to the information terminal 40 of the participant 9 only if the participants have increased. Because the participant list is displayed on the display screen 616 of the information terminal 40 only if the participants have increased, distractions are reduced and new participants are likely to attract attention.

### <Operation procedure based on states>

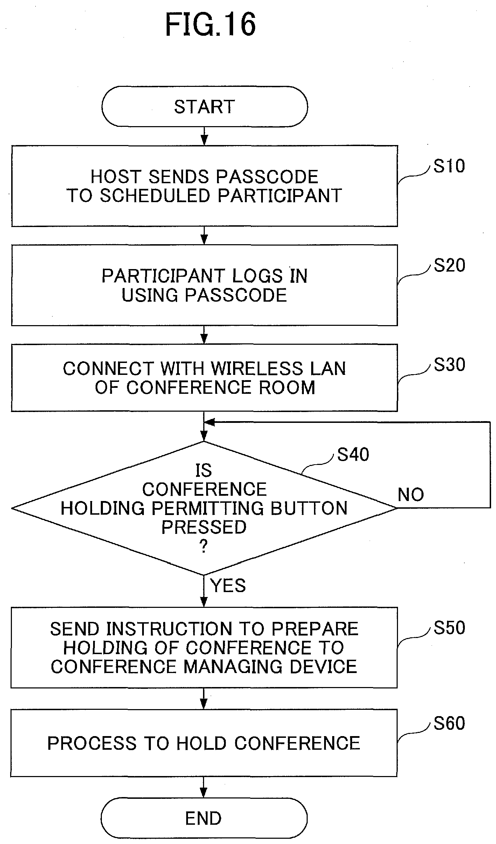

FIG. 16 is a flowchart depicting a procedure from an operation performed by the host 8 to hold a conference until determination of the holding of the conference according to the embodiment of the present invention. The process in FIG. 16 is described on the assumption that the process starts in a state where the host 8 holds the conference.

First, the information terminal 40 of the host 8 receives the operation of the host 8. In response to the operation, the transmitting and receiving unit 41 of the information terminal 40 of the host 8 transmits a passcode to the information terminal 40 of scheduled participants (S10).

The information terminal 40 of the participants 9 logs in by transmitting a request for participation using a name and the passcode to the conference managing device 20 (S20).

The smart device 40a of each participant 9 communicates with the network connection controlling device 10 using set connection information and wirelessly communicates with the conference managing device 20 via the network connection controlling device 10 (S30). Processes in steps S10 to S30 are performed by the smart device 40a of each participant 9. In a case of the laptop computer 40b, the processes in steps S30 and S20 are performed in reverse order.

Next, the information terminal 40 of the host 8 stands by until the host 8 presses the conference holding permitting button 452 (S40). The host 8 confirms a state of participation in the conference from the participant list screen 470 and determines whether all of scheduled participants are listed. In this case, it is assumed that the host 8 presses the conference holding permitting button 452. The operation input receiving unit 44 of the information terminal 40 of the host 8 receives the press of the conference holding permitting button 452.

If the determination of step S40 is YES, the transmitting and receiving unit 41 of the information terminal 40 of the host 8 transmits an instruction to prepare holding of the conference to the conference managing device 20 (S50).

The conference managing device 20 performs a process to hold the conference (S60). In accordance with this, the information terminal 40 of the participant 9 can access conference materials and the like.

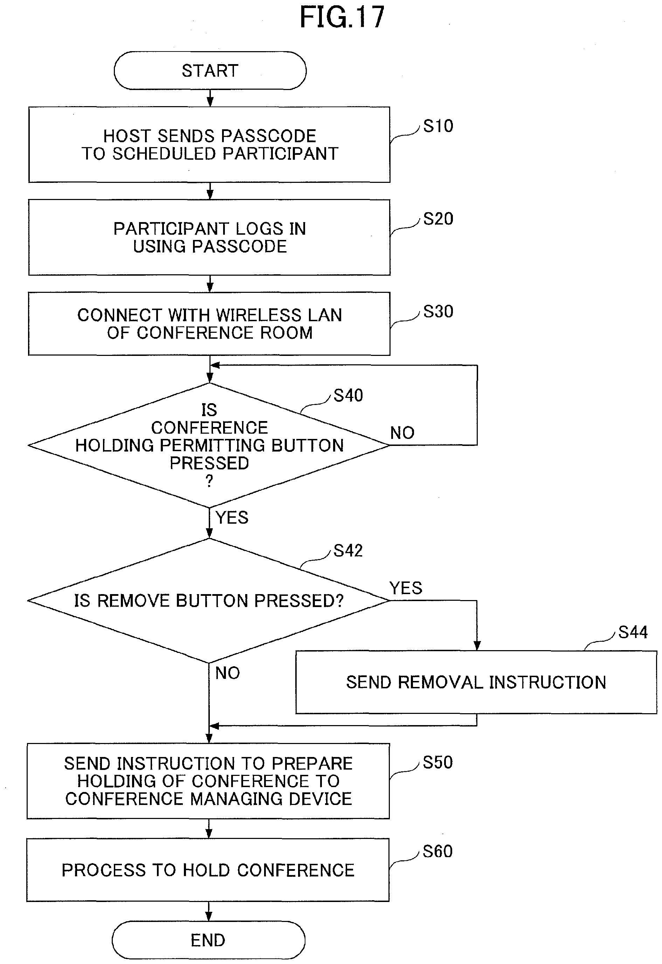

Next, FIG. 17 is a flowchart depicting a procedure from removal of an unscheduled participant 7 by the host 8 until determination of the holding of a conference according to the embodiment of the present invention. Processes in steps S10 to S40 are the same as in FIG. 16.

If the determination of step S40 is YES, the operation input receiving unit 44 of the information terminal 40 of the host 8 determines whether the remove button 453 is pressed (S42).

If the determination of step S42 is YES, the transmitting and receiving unit 41 of the information terminal 40 of the host 8 transmits a removal instruction to the conference managing device 20 (S44).

If the determination of step S42 is NO, subsequent processes are the same as in FIG. 16.

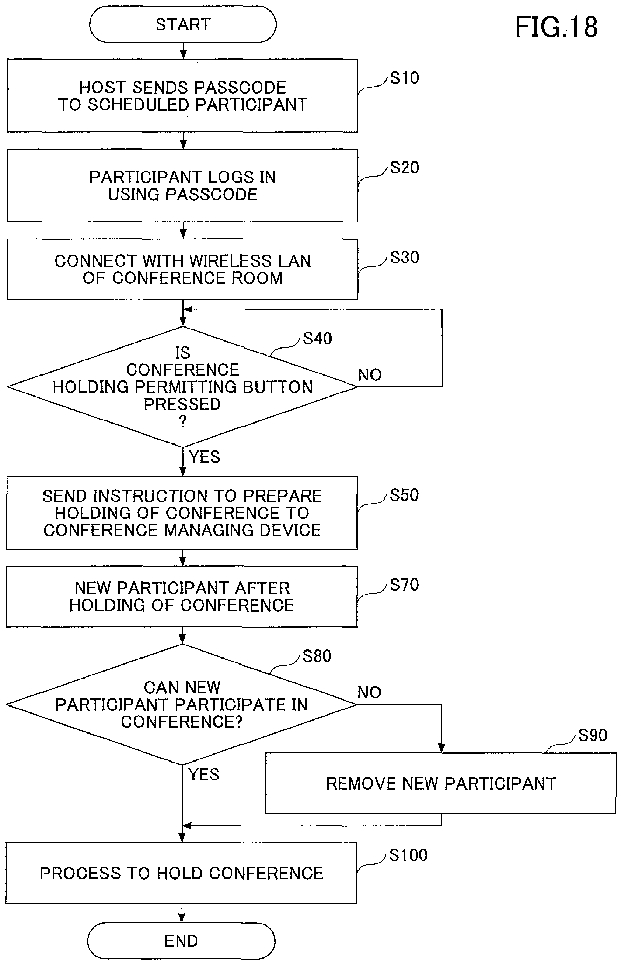

FIG. 18 is a flowchart depicting a procedure by which after a conference is held, when a new participant 9 participates in the conference, the host 8 or another participant 9 removes the new participant 9 according to the embodiment of the present invention. Processes in steps S10 to S50 are the same as in FIG. 16.

After the conference is held, the new participant participates in the conference. From the processes in FIG. 15, the information terminals 40 of the host 8 and the participant 9 that have already participated in the conference display the new participant 9 on the participant list screen 470 and the participant list screen 480 respectively (S70).

The operation input receiving unit 44 of the information terminal 40 of the host 8 or the participant 9 determins whether the remove button 472 or the remove button 482 is pressed (S80). In other words, the host 8 or the participant 9 presses the respective remove button 472 or the remove button 482 depending on whether the new participant 9 may participate in the conference.

If the determination of step S80 is NO, the transmitting and receiving unit 41 of the information terminal 40 of the host 8 or the participant 9 transmits a removal instruction to the conference managing device 20 (S90).

If the determination of step S80 is YES, the conference managing device 20 performs a process to hold the conference (S100). In other words, the host 8 presses the permit button 473, so that the operation input receiving unit 44 of the information terminal 40 of the host 8 receives the press of the permit button 473. In accordance with this, the new participant 9 is registered in the participant information table and the information terminal 40 of the new participant 9 can access conference materials and the like.

As described above, when the new participant 9 participates, the participant list screen 480 including the remove button 482 is displayed in the information terminal 40 of the participant 9 that has already participated in the conference. In accordance with this, the participant 9 that has already participated in the conference is authorized to remove the new participant 9. If the conference managing device 20 receives a removal instruction from the participant 9 that has already participated in the conference, it is necessary to change the ACL depending on implementation. Accordingly, in the following, a procedure for changing the ACL is described.

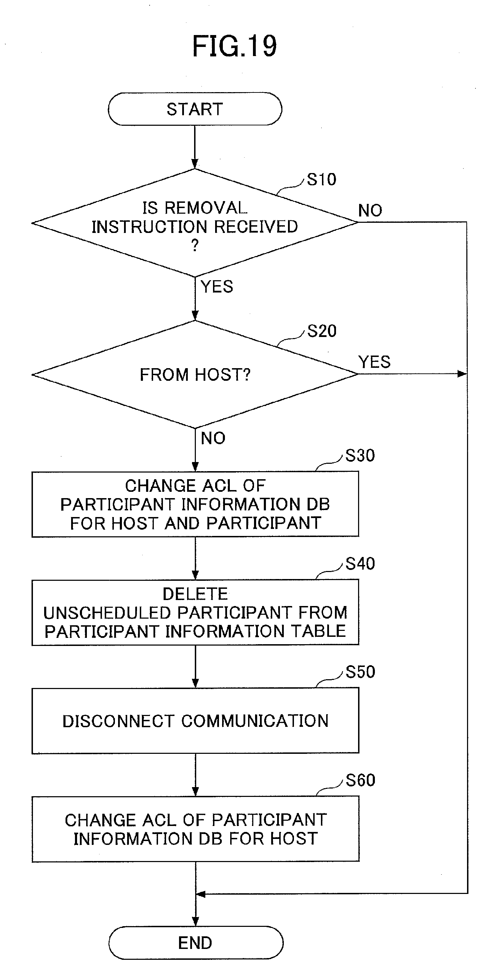

FIG. 19 is a flowchart depicting a procedure by which the conference managing device 20 changes the ACL according to the embodiment of the present invention. The conference start request receiving unit 26 of the conference managing device 20 determines whether a removal instruction is received from the information terminal 40 (S10). If the determination of step S10 is NO, the process in FIG. 19 ends.

If the determination of step S10 is YES, the conference information managing unit 23 determines whether the information terminal 40 that transmits the removal instruction is owned by the host 8 (S20). If the determination of step S20 is YES, the process in FIG. 19 ends. It is possible to determine whether the information terminal 40 is owned by the host 8 by searching the participant information table using an IP address or a MAC address.

If the determination of step S20 is NO, the conference information managing unit 23 changes the ACL of the participant information DB 2003 for the host 8 and the participant 9 (S30). In accordance with this, the participant 9 can operate the participant information DB 2003.

Next, the conference start request receiving unit 26 deletes an unscheduled participant 7 from the participant information table (S40).

Next, the network connection controlling unit 25 disconnects communication of the unscheduled participant 7 for which the removal instruction is transmitted (S50).

The conference information managing unit 23 changes the ACL of the participant information DB 2003 for the host 8 (S60).

As described above, the participant 9 can delete the unscheduled participant 7 from the participant information DB 2003.

The communication system 100 according to the embodiment sends, to the host 8 or the participant 9, a report that the new participant 9 is added, so that the host 8 or the participant 9 can forcibly remove the unscheduled participant 7 from the conference. Accordingly, it is possible to ensure security of the conference while realizing the conference room 6 in which the information terminal 40 is used to wirelessly operate conference materials and a device.

### [Example 2]

In Example 2, the communication system 100 in which participants 9 are registered in advance in the conference managing device 20 is described. Because the conference managing device 20 can determine whether the participant 9 that participates in a conference is registered in advance, if an unscheduled participant 7 participates, the conference managing device 20 can transmit the fact to the information terminal 40 of the participant 9.

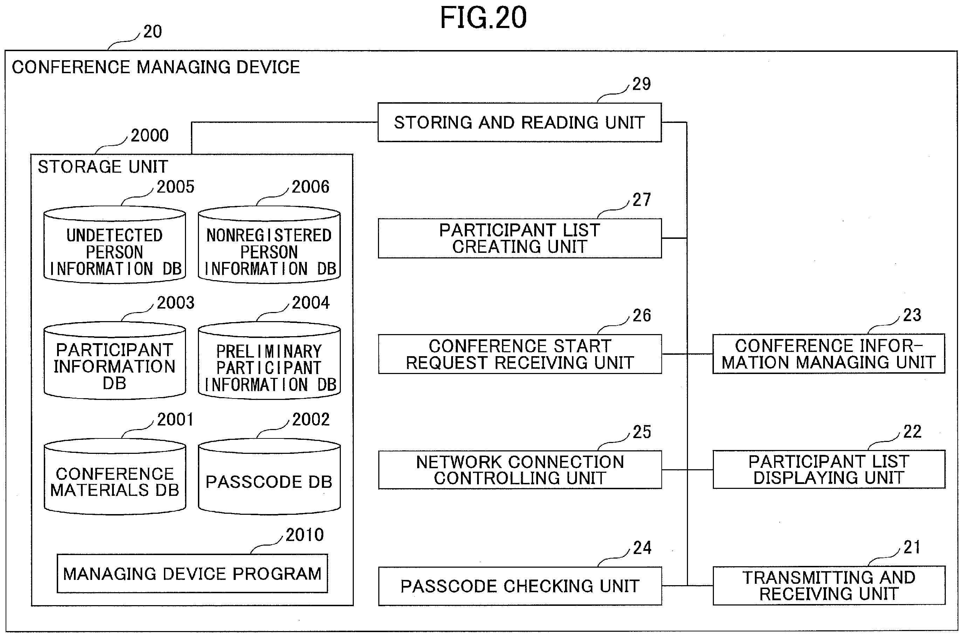

FIG. 20 is a functional block diagram of the conference managing device 20 according to the embodiment of the present invention. In the example, constituent elements of FIG. 20 provided with the same reference numerals as in FIG. 6 filfill the same functions, so that only those main constituent elemnts of the example may be mainly described. In addition, functional configurations of the smart device 40a, the laptop computer 40b, and the network connection controlling device 10 may be the same as in FIG. 6. The conference managing device 20 in the example includes a preliminary participant information DB 2004, an undetected person information DB 2005, and a nonregistered person information DB 2006.

**[Table 6]**

| Name | Nickname | Phone number | Mail address |
|---|---|---|---|
| Taro Yamada | Taro | 03-1234-xxx1 | ABC@DEF1.co.jp |
| Jiro Suzuki | Jiro | 03-1234-xxx2 | ABC@DEF2.co.jp |
| Saburo Sato | Saburo | 03-1234-xxx3 | ABC@DEF3.co.jp |

Table 6 indicates an example of a preliminary participant information table stored in the preliminary participant information DB 2004. In the preliminary participant information table, scheduled participants are registered. Examples of items to be registered include names, nicknames, phone numbers, and mail addresses. These items may be any information as long as the item can identify the participant 9 and so an IP address or a MAC address may be registered.

**[Table 7]**

| Conference ID: 001 | Conference name: project A | Conference location: room A | |
|---|---|---|---|
| Name | Nickname | Phone number | Mail address |
| Taro Yamada | Taro | 03-1234-xxx1 | ABC@DEF1.co.jp |
| Jiro Suzuki | Jiro | 03-1234-xxx2 | ABC@DEF2.co.jp |
| Saburo Sato | Saburo | 03-1234-xxx3 | ABC@DEF3.co.jp |

Table 7 indicates an example of an undetected person information table stored in the undetected person information DB 2005. In the undetected person information table, the preliminary participant information table is registered without modification (copied). In addition, the undetected person information table is created after a conference is started, so that the conference managing device 20 can identify a conference ID or the like. The undetected person information table is a list of undetected persons and the number of undetected persons is decreased as scheduled participants participate in the conference.

**[Table 8]**

| Name | Nickname | Passcode | IP address | MAC address | Model number | Phone number | Mail address |
|---|---|---|---|---|---|---|---|
| Shiro Kato | Siro | 0090 | 198.168.11.1 3 | ABCDEFGK | IOS, app | 03-1234-xxx4 | ABC@DE F4.co.jp |

Table 8 is an example of a nonregistered person information table stored in the nonregistered person information DB 2006. If "Shiro Kato" participates as a participant 9, because "Shiro Kato" is not registered in the preliminary participant information table in Table 6, "Shiro Kato" is registered in the nonregistered person information DB 2006.

The participant list creating unit 27 of this example use the preliminary participant information DB 2004, the undetected person information DB 2005, and the nonregistered person information DB 2006 to perform an operation as follows. The participant list creating unit 27 detects a participant 9 that is not registered in the preliminary participant information table and clearly represents the participant 9 in the participant list. In accordance with this, another participant 9 for which the participant list screen 480 is displayed can readily determine which participant 9 is an unscheduled participant 7. Further, the participant list creating unit 27 detects a participant 9 that is registered in the preliminary participant information table but is not registered in the participant information table and clearly represents the participant 9 in the participant list. In accordance with this, another participant 9 for which the participant list screen 480 is displayed can readily determine which participant 9 is not participating.

### <State transition>

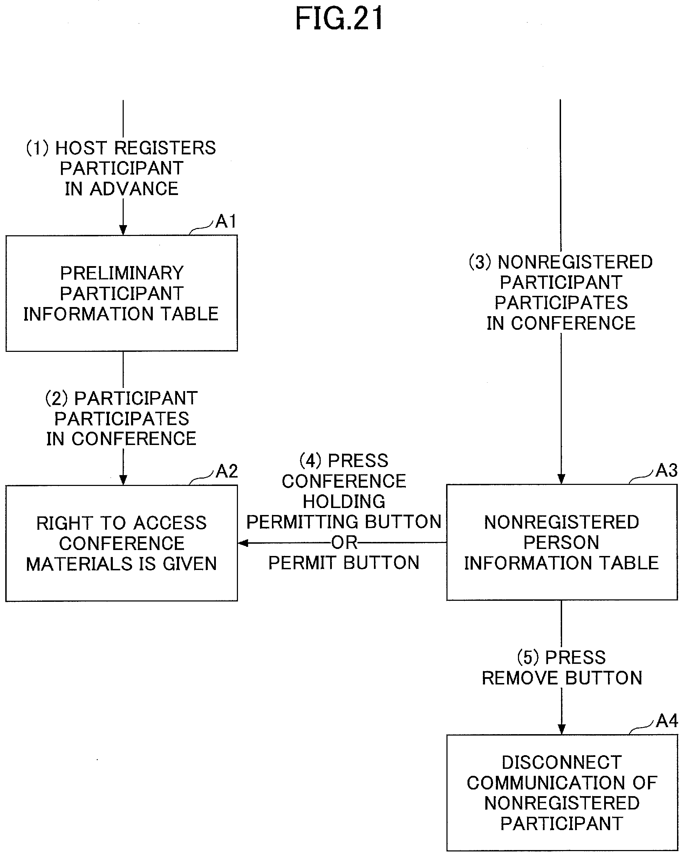

In the following, a state transision of the communication system 100 is described with reference to FIG. 21.
(1) The host 8 registers a participant 9 in advance.
   A1. In accordance with this, the preliminary participant information table is created.
(2) The participant 9 registered in the preliminary participant information table participates in a conference.
   A2. In accordance with this, the participant 9 in the preliminary participant information table is given a right to access conference materials and the like.
(3) In contrast, a nonregistered participant 9 participates in the conference.
   A3. In accordance with this, the nonregistered participant 9 is registered in the nonregistered person information table.
(4) If the host 8 presses the conference holding permitting button 452 or the permit button, the state becomes A2.
(5) The host 8 or the participant 9 presses the remove button.
   A4. Communication of the nonregistered participant 9 is disconnected.

### <Operation procedure>

### <<Process of conference managing device 20>>

It is assumed that procedures for holding a conference and participating in the conference are the same as the operation procedures described with reference to FIGs. 7 to 11 or a difference does not have an influence on the description of this example. In the following, operation procedures of the conference managing device 20 and the information terminal 40 are described as the feature of this example.

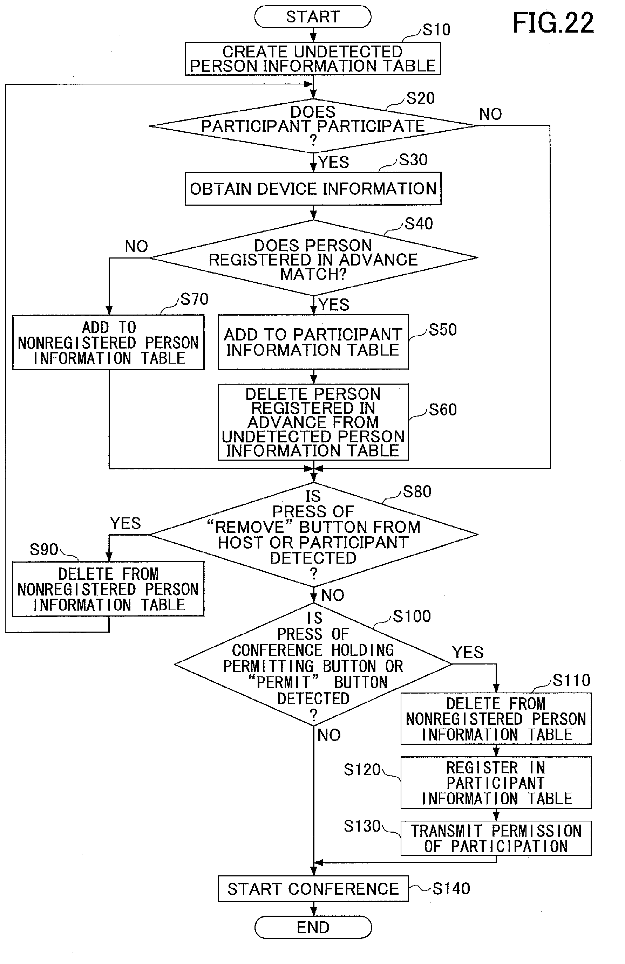

FIG. 22 is a flowchart depicting a procedure by which the conference managing device 20 operates the nonregistered person information table or the like according to the embodiment of the present invention. The process in FIG. 22 is described on the assumption that the process starts after the process in FIG. 7 ends.

The participant list creating unit 27 of the conference managing device 20 creates the undetected person information table by copying the preliminary participant information table (S10). Because the participant information table is created when the host 8 sends a request for a conference start, a name, a nickname, a passcode, an IP address, a MAC address, a model number, a phone number, and a mail address of the host 8 are registered. The participant list creating unit 27 identifies the preliminary participant information table that includes a scheduled participant having at least one of the name, the nickname, the phone number, and the mail address that matches, and copies the identified preliminary participant information table as the undetected person information table.

Next, participants 9 successively participate in the conference, so that the conference managing device 20 detects these participants 9 (S20).

The participant list creating unit 27 obtains the name, the passcode, and device information from the information terminal 40 of the participant 9 (S30).

The participant list creating unit 27 determines whether participant information about the detected participant 9 is registered in the preliminary participant information table identified in step S10 (S40). In this case, the participant list creating unit 27 determines whether at least one of the name, the passcode, and the device information obtained in step S30 is registered in the preliminary participant information table.

If the determination of step S40 is YES, the participant list creating unit 27 identifies the participant information table based on the passcode and registers the passcode, the name, and the device information in the participant information table (S50).

Next, from the undetected person information table created in step S10, the participant list creating unit 27 deletes the participant 9 added to the participant information table (S60).

If the determination of step S40 is NO, the participant list creating unit 27 registers the passcode, the name, and the device information in the nonregistered person information table, the passcode, the name, and the device information being obtained in step S30 (S70).

In response to participation of the new participant 9, the participant list screen 470 or the participant list screen 480 is displayd in the information terminal 40 of the host 8 or the participant 9. The participant list screen 470 or the participant list screen 480 may be displayed when the host 8 or the participant 9 presses the participant list button 445 on the conference screen 440. Alternatively, the participant list screen 470 or the participant list screen 480 may be displayed through a push service from the conference managing device 20.

Next, the participant list creating unit 27 determines whether a removal instruction is received from the information terminal 40 of the host 8 or the participant 9 through the press of the remove button 472 or the remove button 482 (S80).

If the determination of step S80 is YES, the participant list creating unit 27 deletes nonregistered person information from the nonregistered person information table (S90).

If the determination of step S80 is NO, the participant list creating unit 27 determines whether an instruction to prepare holding of the conference is received from the host 8 (S100).

If the determination of step S100 is YES, the participant 9 added to the nonregistered person information table is allowed to participate in the conference by the host 8. Accordingly, the participant list creating unit 27 deletes nonregistered person information from the nonregistered person information table, the nonregistered person information being registered in step S70 (S110). Further, the participant list creating unit 27 registers the deleted nonregistered person information in the participant information table (S120).

Further, the participant list creating unit 27 transmits participation permission to the information terminal 40 of the nonregistered person (S130).

Then the conference information managing unit 23 performs a process to hold the conference (S140).

### <<Process of information terminal 40 of participant>>

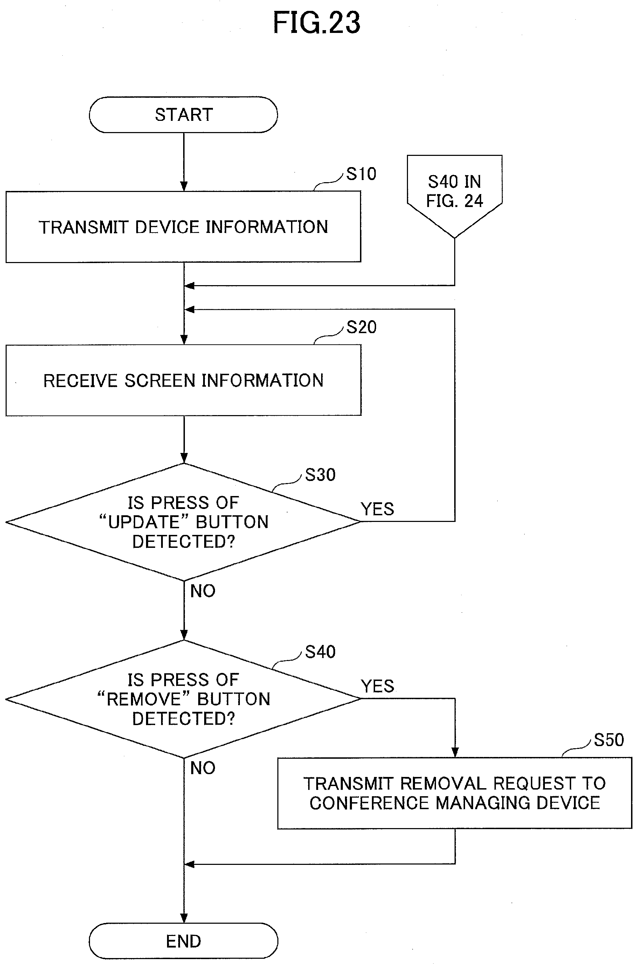

FIG. 23 is a flowchart depicting a procedure by which the information terminal 40 of the participant 9 removes a nonregistered participant according to the embodiment of the present invention. The process in FIG. 23 starts after holding the conference.

First, the information terminal 40 of the participant 9 transmits the name, the passcode, and the device information to the conference managing device 20 (S10). In accordance with this, its own device is registered in the participant information table based on the assumption that the participant 9 is registered in preliminary participant information table.

Next, the information terminal 40 of the participant 9 obtains screen information to display the conference screen from the conference managing device 20 (S20). In other words, the information terminal 40 obtains the screen information to display the participant list and conference information.

The operation input receiving unit 44 of the information terminal 40 of the participant 9 determines whether press of an update button is received (S30). The update button serves as a function of updating a screen prepared for a browser or an application to the latest state. The update button is effective if a push service is not supported by the browser or the application. If the push service is supported, the participant 9 may not press the update button. For example, the browser or the application may periodically send an inquiry about whether there is an increase or decrease of participants to the conference managing device 20.

When the participant list screen is displayed in the information terminal 40 of the participant 9, the operation input receiving unit 44 of the information terminal 40 of the participant 9 determines whether press of the remove button is received (S40).

If the determination of step S40 is YES, the transmitting and receiving unit 41 of the information terminal 40 transmits a removal instruction to the conference managing device 20 (S50).

Then the information terminal 40 displays a new participant list screen.

### <<Process of information terminal 40 of nonregistered person>>

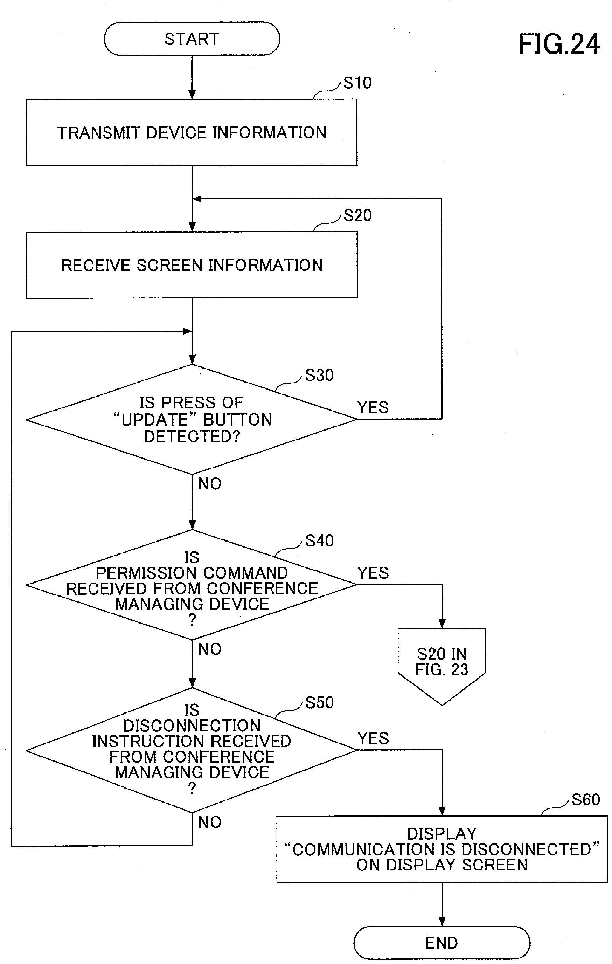

FIG. 24 is a flowchart depicting a procedure performed by the information terminal 40 of a nonregistered participant 9 according to the embodiment of the present invention. The process in FIG. 24 starts after holding the conference. In addition, processes in steps S10 to S30 of FIG. 24 are the same as in FIG. 23.

In step S40, the transmitting and receiving unit 41 of the information terminal 40 of the nonregistered participant 9 determines whether participation permission is received from the conference managing device 20 (S40).

If the determination of step S40 is YES, the process proceeds to step S20 in FIG. 23. In this case, the nonregistered participant 9 is haldled as a scheduled participant and is removed when the remove button 472 or the remove button 482 is pressed.

If the determination of step S40 is NO, the information terminal 40 of nonregistered participant 9 determines whether an instruction to disconnect communication is received from the conference managing device 20 (S50).

If the determination of step S50 is YES, the display controlling unit 45 of the information terminal 40 of the nonregistered participant 9 displays "communication is disconnected" on the display screen 616 (S60).

If the determination of step S50 is NO, the process proceeds to step S30 and the information terminal 40 of the nonregistered participant 9 stands by until a permission command or an disconnection instruction is received from the conference managing device 20.

### <Screen examples>

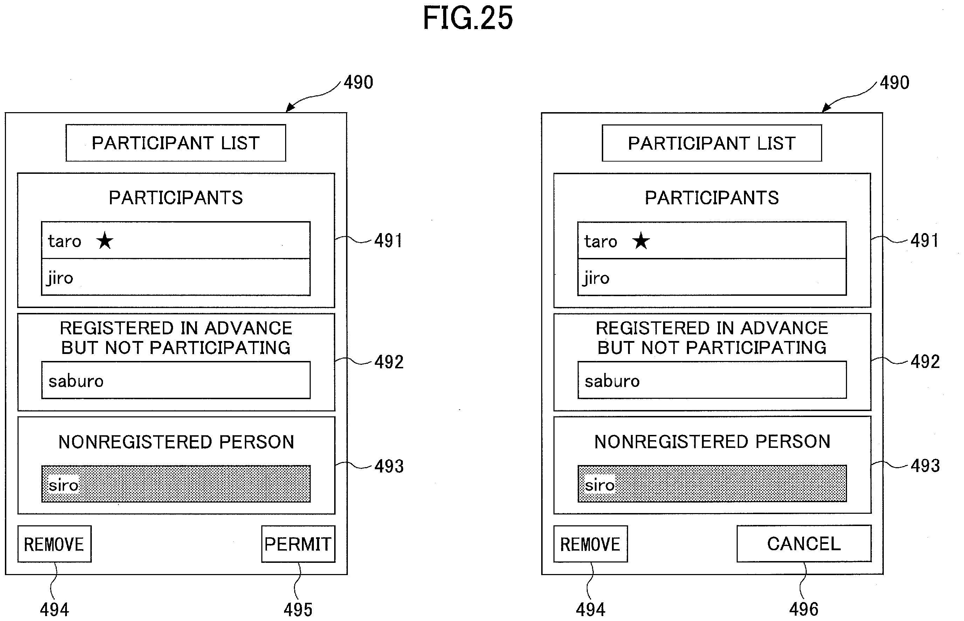

FIG. 25 is a diagram depicting participant list screens displayed in the information terminal 40 in the example. In FIG. 25, a participant list screen 490 displayed in the information terminal 40 of the host 8 is illustrated on the left and another participant list screen 490 displayed in the information terminal 40 of the participant 9 is illustrated on the right. In addition, a permit button 495 is displayed only in the information terminal 40 of the host 8 in the same manner as in Example 1.

In this example, both participant list screens 490 in FIG. 25 include a participant field 491, a nonparticipating person field 492, and a nonregistered person field 493. In the participant field 491, the names of the participants 9 registered in the participant information table are displayed. In the nonparticipating person field 492, the name of the participant 9 registered in the undetected person information table is displayed. In the nonregistered person field 493, the name of the participant 9 registered in the nonregistered person information table is displayed.

Accordingly, the host 8 and the participant 9 can easily determine the nonregistered participant 9 and remove or permit participation. Further, it is possible to easily determine the participant 9 registered in the preliminary participant information table but not participating and to send a mail to prompt participation, for example.

### <Variation>

The conference managing device 20 can forcibly remove a nonregistered person without waiting for a removal instruction from the host 8 or the participant 9. In this variation, the nonregistered person information DB 2006 is not used.

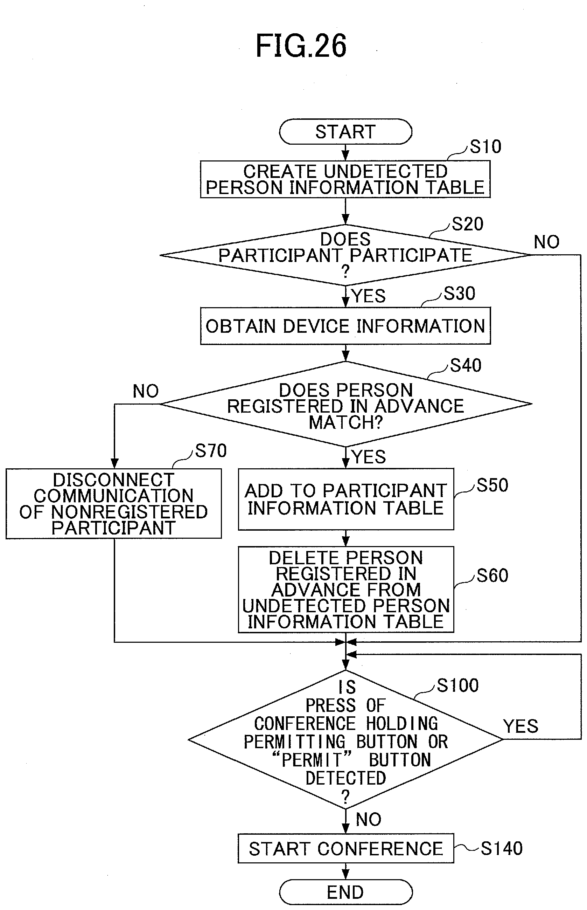

FIG. 26 is a flowchart depicting a procedure by which the conference managing device 20 removes a nonregistered person according to the embodiment of the present invention. In FIG. 26, a difference from FIG. 22 is mainly described.

If the determination of step S40 is NO, the network connection controlling unit 25 disconnects communication of the nonregistered participant 9 (S70). Accordingly, it is possible to prevent the nonregistered participant 9 from participating in the conference without a removal instruction from the host 8 or the participant 9.

Next, the participant list creating unit 27 determines whether an instruction to prepare holding of the conference is obtained from the host 8 (S100).

If the determination of step S100 is YES, the conference information managing unit 23 performs a process to hold the conference (S140).

As described above, the communication system 100 according to this example enables the host 8 and the participant 9 to easily determine the nonregistered participant 9 in addition the effects provided in Example 1. Further, it is possible to automatically remove the nonregistered participant 9.

### <Other application examples>

As mentioned above, the best mode to carry out the present invention is described using examples. However, the present invention is not limited at all to these examples. It is possible to add various types of modifications and replacements within the scope of the present invention.

For example, the configuration as illustrated in FIG. 6, for example, is divided based on main functions in order to facilitate understanding of processes performed by the conference managing device 20, the smart device 40a, the laptop computer 40b, and the network connection controlling device 10. The present invention is not limited by how a process unit is divided or a name. It is possible to divide the processes of the conference managing device 20, the smart device 40a, the laptop computer 40b, and the network connection controlling device 10 into more process units depending on a specific process. Further, it is possible to divide one process unit to include more processes.

Further, various types of databases stored in the storage unit 2000 and various types of databases stored in the storage unit 1000 in FIG. 6 may be present on one of the conference network 92 and the shared network 91.

A plurality of conference managing devices 20 or a plurality of network connection controlling devices 10 may be present. Functions of the conference managing device 20 or the network connection controlling device 10 may be dispersed and disposed in a plurality of servers.

Further, participant information about a participant 9 removed at least once may be stored in a predetermined database and participation in a conference may not be permitted even if authentication is successful in a future conference.

Further, while removal is used as an example in the embodiment, the participant 9 may suspend the conference if the unscheduled participant 7 participates. Because access to conference materials is temporarily suspended due to the suspension of the conference, it is possible to ensure security while the participant 9 determines whether to remove the unscheduled participant 7.

The conference managing device 20 is an example of a conference information processing apparatus. The participant list creating unit 27 is an example of an information storage unit. The name, the IP address, the MAC address, the attendee ID, or the like included in the removal instruction is an example of identification information. The participant information DB 2003 is an example of a first memory unit. The nonregistered person information DB 2006 is an example of a second memory unit. The undetected person information DB 2005 is an example of a third memory unit. The passcode is an example of authentication information. The passcode checking unit 24 is an example of an authentication unit. The transmitting and receiving unit 21 is an example of a reception unit. The participant list displaying unit 22 is an example of a transmission unit. The conference information managing unit 23 is an example of a communication controlling unit. The network connection controlling unit 25 is an example of a communication restricting unit. And the participant information is an example of related information.

Further, the present invention is not limited to these embodiments, and various variations and modifications may be made without departing from the scope of the present invention.

## Claims

1. A conference information processing apparatus (20) for wireless communication with information terminals (40), the conference information processing apparatus permitting the information terminals (40) that participate in a conference to access information used at the conference, the conference information processing apparatus comprising:
an authentication unit (24) configured to authenticate the information terminals (40) based on authentication information, the authentication information being transmitted from the information terminals (40);
an information storage unit (27) configured to store related information about the information terminals (40) in a first memory unit (2003), the related information being transmitted from the information terminals (40) permitted to participate in the conference in response to successful authentication performed by the authentication unit (24);
a transmission unit (22) configured to transmit the related information about the information terminals (40) stored in the first memory unit (2003) to the information terminals (40) successfully authenticated by the authentication unit (24); and
a communication restricting unit (25) configured to restrict communication performed by a first one of the information terminals (40) indicated by identification information, the identification information being included in the related information, in a case where the identification information indicative of the first one of the information terminals (40) and a request for removal from the conference are received from a second one of the information terminals (40);
**characterised in that** the communication restriction includes registering the identification information in a removal list database and discarding communication requests from the first one of the information terminals (40) identified by the identification information.

2. The conference information processing apparatus (20) according to claim 1, further comprising:
a communication controlling unit (23) configured to receive a request to start communication from a third one of the information terminals (40),
wherein the communication restricting unit (25) receives the identification information indicative of the first one of the information terminals (40) from the second one of the information terminals (40), the second one of the information terminals (40) being different from the third one of the information terminals (40) that transmits the request to start communication.

3. The conference information processing apparatus (20) according to claim 1, further comprising:
a reception unit (21) configured to receive, from the information terminals (40), an inquiry about whether a number of the information terminals (40) participating in the conference has changed,
wherein, in a case where the number of the information terminals (40) stored in the first memory unit (2003) has increased from a previous inquiry, the transmission unit (22) transmits the related information stored in the first memory unit (2003), together with related information about an increased information terminal, to the information terminals (40) that send the inquiry.

4. The conference information processing apparatus (20) according to claim 2,
wherein, in a case where the communication controlling unit (23) receives the request to start communication from the third one of the information terminals (40), the communication controlling unit (23) creates the authentication information and transmits the authentication information to the third one of the information terminals (40) that transmits the request to start communication, and
wherein, the authentication unit (24) authenticates the information terminals (40) that receive the authentication information from the third one of the information terminals (40) that transmits the request to start communication, the authentication being performed based on the authentication information transmitted by the information terminals (40) to the conference information processing apparatus.

5. The conference information processing apparatus (20) according to claim 1,
wherein, the related information includes at least one of a user name, an IP address, a MAC address, a model number, a phone number, and a mail address of the information terminals (40), and
wherein, the transmission unit (22) transmits, to the information terminals (40) authenticated by the authentication unit (24), at least one of the user name, the IP address, the MAC address, the model number, the phone number, and the mail address of the information terminals.

6. The conference information processing apparatus (20) according to claim 1,
wherein, the information storage unit (27) determines whether related information about the information terminals (40) stored in advance includes the related information about the information terminals (40) transmitted from the information terminals (40) in response to successful authentication performed by the authentication unit (24),
wherein, the information storage unit (27) stores the transmitted related information in the first memory unit (2003) in a case where the related information stored in advance includes the transmitted related information, and the information storage unit (27) stores the transmitted related information in a second memory unit in a case where the related information stored in advance does not include the transmitted related information, and
wherein, the transmission unit (22) distinguishably transmits the related information stored in the first memory unit (2003) and the related information stored in the second memory unit to the information terminals (40).

7. The conference information processing apparatus (20) according to claim 6,
wherein, the information storage unit stores (27), in a third memory unit, the transmitted related information about the information terminals (40) that is included in the related information about the information terminals stored in advance but is not stored in the first memory unit (2003), and
wherein, the transmission unit (22) transmits the related information stored in the third memory unit to the information terminals (40) distinguishably from the related information stored in the first memory unit (2003) and the related information stored in the second memory unit.

8. The conference information processing apparatus (20) according to claim 1,
wherein, the information storage unit (27) determines whether related information about the information terminals stored in advance includes the related information about the information terminals (40) transmitted from the information terminals (40) in response to successful authentication performed by the authentication unit (24), and
wherein the communication restricting unit (25) restricts, without transmitted identification information, communication performed by the first one of the information terminals (40) whose related information is not determined by the information storage unit (27) to be included in the related information about the information terminals (40) stored in advance.

9. A method for communication in a communication system in which information terminals (40) are in wireless communication with a conference information processing apparatus (20) for permitting the information terminals (40) that participate in a conference to access information used at the conference, the method for communication comprising:
transmitting, by the the information terminals (40), authentication information to the conference information processing apparatus (20);
authenticating the information terminals (40) based on authentication information, the authentication information being transmitted from the information terminals (40);
storing related information about the information terminals (40) in a first memory unit (2003), the related information being transmitted from the information terminals (40) permitted to participate in the conference in response to successful authentication performed in the authentication;
transmiting the related information about the information terminals (40) stored in the first memory unit (2003) to the information terminals (40) successfully authenticated; and
restricting communication performed by a first one of the information terminals (40) indicated by identification information, the identification information being included in the related information, in a case where the identification information indicative of the first one of the information terminals (40) and a request for removal from the conference are received from a second one of the information terminals (40);
**characterised in that** the communication restriction includes registering the identification information in a removal list database and discarding communication requests from the first one of the information terminals (40) identified by the identification information.

10. A communication system (100) in which information terminals (40) are in wireless communication with a conference information processing apparatus (20) for permitting the information terminals (40) that participate in a conference to access information used at the conference, the communication system comprising:
a first transmission unit configured to transmit authentication information to the conference information processing apparatus;
an authentication unit (24) configured to authenticate the information terminals (40) based on authentication information, the authentication information being transmitted from the information terminals (40);
an information storage unit (22) configured to store related information about the information terminals (40) in a first memory unit (2003), the related information being transmitted from the information terminals (40) permitted to participate in the conference in response to successful authentication performed by the authentication unit (24);
a second transmission unit (22) configured to transmit the related information about the information terminals (40) stored in the first memory unit (2003) to the information terminals successfully authenticated by the authentication unit (24); and
a communication restricting unit (25) configured to restrict communication performed by a first one of the information terminals (40) indicated by identification information, the identification information being included in the related information, in a case where the identification information indicative of the first one of the information terminals (40) and a request for removal from the conference are received from a second one of the information terminals (40);
**characterised in that** the communication restriction includes registering the identification information in a removal list database and discarding communication requests from the first one of the information terminals (40) identified by the identification information.

11. The communication system (100) according to claim 10, further comprising:
a communication controlling unit (23) configured to receive a request to start communication from a third one of the information terminals (40),
wherein the communication restricting unit receives the identification information indicative of the first one of the information terminals (40) from the second one of the information terminals (40), the second one of the information terminals (40) being different from the third one of the information terminals (40) that transmits the request to start communication.

12. The communication system (100) according to claim 10, further comprising:
a reception unit (21) configured to receive, from the information terminals (40), an inquiry about whether a number of the information terminals (40) participating in the conference has changed,
wherein, in a case where the number of the information terminals (40) stored in the first memory unit (2003) has increased from a previous inquiry, the second transmission unit (22) transmits the related information stored in the first memory unit (2003), together with related information about an increased information terminal, to the information terminals (40) that send the inquiry.

13. The communication system (100) according to claim 11,
wherein, in a case where the communication controlling unit (23) receives the request to start communication from the third one of the information terminals (40), the communication controlling unit (23) creates the authentication information and transmits the authentication information to the third one of the information terminals (40) that transmits the request to start communication, and
wherein, the authentication unit (24) authenticates the information terminals (40) that receive the authentication information from the third one of the information terminals (40) that transmits the request to start communication, the authentication being performed based on the authentication information transmitted by the information terminals (40) to the conference information processing apparatus.

14. The communication system (100) according to claim 10,
wherein, the related information includes at least one of a user name, an IP address, a MAC address, a model number, a phone number, and a mail address of the information terminals (40), and
wherein, the second transmission unit (22) transmits, to the information terminals (40) authenticated by the authentication unit, at least one of the user name, the IP address, the MAC address, the model number, the phone number, and the mail address of the information terminals (40).

15. The communication system (100) according to claim 10,
wherein, the information storage unit (27) determines whether related information about the information terminals (40)stored in advance includes the related information about the information terminals (40) transmitted from the information terminals (40) in response to successful authentication performed by the authentication unit (24),
wherein, the information storage unit (27) stores the transmitted related information in the first memory unit (2003) in a case where the related information stored in advance includes the transmitted related information, and the information storage unit (27) stores the transmitted related information in a second memory unit in a case where the related information stored in advance does not include the transmitted related information, and
wherein, the second transmission unit (22) distinguishably transmits the related information stored in the first memory unit (2003) and the related information stored in the second memory unit to the information terminals (40).

## Patentansprüche

1. Konferenzinformationsverarbeitungsvorrichtung (20) zur drahtlosen Kommunikation mit Informationsendgeräten (40), wobei die Konferenzinformationsverarbeitungsvorrichtung den Informationsendgeräten (40), die an einer Konferenz teilnehmen, erlaubt, auf an der Konferenz verwendete Information zuzugreifen, wobei die Konferenzinformationsverarbeitungsvorrichtung Folgendes umfasst:
eine Authentifizierungseinheit (24), die konfiguriert ist, die Informationsendgeräte (40) basierend auf Authentifizierungsinformation zu authentifizieren, wobei die Authentifizierungsinformation von den Informationsendgeräten (40) übertragen wird;
eine Informationsspeichereinheit (27), die konfiguriert ist, zugehörige Information über die Informationsendgeräte (40) in einer ersten Speichereinheit (2003) zu speichern, wobei die zugehörige Information von den Informationsendgeräten (40), denen es erlaubt ist, an der Konferenz teilzunehmen, als Reaktion auf erfolgreiche durch die Authentifizierungseinheit (24) durchgeführte Authentifizierung übertragen wird;
eine Übertragungseinheit (22), die konfiguriert ist, die zugehörige Information über die Informationsendgeräte (40), die in einer ersten Speichereinheit (2003) gespeichert ist, an die von der Authentifizierungseinheit (24) erfolgreich authentifizierten Informationsendgeräte (40) zu übertragen; und
eine Kommunikationsbeschränkungseinheit (25), die konfiguriert ist, von einem ersten Informationsendgerät (40), das durch Identifizierungsinformation angegeben wird, durchgeführte Kommunikation zu beschränken, wobei die Identifizierungsinformation in der zugehörigen Information enthalten ist in einem Fall, in dem die Identifizierungsinformation, die für das erste der Informationsendgeräte (40) bezeichnend ist, und eine Anforderung zur Entfernung von der Konferenz von einem zweiten der Informationsendgeräte (40) empfangen werden;
**dadurch gekennzeichnet, dass** die Kommunikationsbeschränkung ein Registrieren der Identifizierungsinformation in einer Entfernungslistendatenbank und ein Verwerfen von Kommunikationsanforderungen von dem von der Identifizierungsinformation identifizierten ersten der Informationsendgeräte (40) umfasst.

2. Konferenzinformationsverarbeitungsvorrichtung (20) nach Anspruch 1, ferner umfassend:
eine Kommunikationssteuereinheit (23), die konfiguriert ist, eine Anforderung, eine Kommunikation zu starten, von einem dritten der Informationsendgeräte (40) zu empfangen,
wobei die Kommunikationsbeschränkungseinheit (25) die für das erste der Informationsendgeräte (40) bezeichnende Identifizierungsinformation vom zweiten der Informationsendgeräte (40) empfängt, wobei das zweite der Informationsendgeräte (40) sich vom dritten der Informationsendgeräte (40) unterscheidet, das die Anforderung, eine Kommunikation zu starten, überträgt.

3. Konferenzinformationsverarbeitungsvorrichtung (20) nach Anspruch 1, ferner umfassend:
eine Empfangseinheit (21), die konfiguriert ist, von den Informationsendgeräten (40) eine Anfrage darüber, ob eine Anzahl der Informationsendgeräte (40), die an der Konferenz teilnehmen, geändert hat, zu empfangen,
wobei in einem Fall, in dem die Anzahl der in der ersten Speichereinheit (2003) gespeicherten Informationsendgeräte (40) von einer vorhergehenden Anfrage erhöht wurde, die Übertragungseinheit (22) die in der ersten Speichereinheit (2003) gespeicherte zugehörige Information zusammen mit zugehöriger Information über ein erhöhtes Informationsendgerät an die Informationsendgeräte (40), die die Anfrage senden, überträgt.

4. Konferenzinformationsverarbeitungsvorrichtung (20) nach Anspruch 2,
wobei, in einem Fall, in dem die Kommunikationssteuereinheit (23) die Anforderung, eine Kommunikation zu starten, von dem dritten der Informationsendgeräte (40) empfängt, die Kommunikationssteuereinheit (23) die Authentifizierungsinformation erstellt und die Authentifizierungsinformation an das dritte der Informationsendgeräte (40), das die Anforderung, eine Kommunikation zu starten, überträgt, überträgt, und
wobei die Authentifizierungseinheit (24) die Informationsendgeräte (40), die die Authentifizierungsinformation vom dritten der Informationsendgeräte (40) empfangen, das die Anforderung, eine Kommunikation zu starten, überträgt, wobei die Authentifizierung basierend auf der Authentifizierungsinformation, die von den Informationsendgeräten (40) an die Konferenzinformationsverarbeitungsvorrichtung übertragen wurden, durchgeführt wird.

5. Konferenzinformationsverarbeitungsvorrichtung (20) nach Anspruch 1,
wobei die zugehörige Information mindestens eines aus einem Benutzernamen, einer IP-Adresse, einer MAC-Adresse, einer Modellnummer, einer Telefonnummer und einer Mailadresse der Informationsendgeräte (40) umfasst, und
wobei die Übertragungseinheit (22) dem von der Authentifizierungseinheit (24) authentifizierten Informationsendgerät (40) mindestens eines aus dem Benutzernamen, der IP-Adresse, der MAC-Adresse, der Modellnummer, der Telefonnummer und der Mailadresse der Informationsendgeräte überträgt.

6. Konferenzinformationsverarbeitungsvorrichtung (20) nach Anspruch 1,
wobei die Informationsspeichereinheit (27) bestimmt, ob im Voraus gespeicherte zugehörige Information über die Informationsendgeräte (40) die von den Informationsendgeräten (40) als Reaktion auf erfolgreiche von der Authentifizierungseinheit (24) durchgeführte Authentifizierung übertragene zugehörige Information über die Informationsendgeräte (40) umfasst,
wobei die Informationsspeichereinheit (27) die übertragene zugehörige Information in der ersten Speichereinheit (2003) speichert, in einem Fall, in dem die im Voraus gespeicherte zugehörige Information die übertragene zugehörige Information umfasst, und die Informationsspeichereinheit (27) die übertragene zugehörige Information in einer zweiten Speichereinheit speichert, in einem Fall, in dem die im Voraus gespeicherte zugehörige Information die übertragene zugehörige Information nicht umfasst, und
wobei die Übertragungseinheit (22) die in der ersten Speichereinheit (2003) gespeicherte zugehörige Information und die in der zweiten Speichereinheit gespeicherte zugehörige Information den Informationsendgeräten (40) unterscheidbar überträgt.

7. Konferenzinformationsverarbeitungsvorrichtung (20) nach Anspruch 6,
wobei die Informationsspeichereinheit (27) in einer dritten Speichereinheit die übertragene zugehörige Information über die Informationsendgeräte (40), die in der zugehörigen Information über die im Voraus gespeicherten Informationsendgeräte enthalten ist, jedoch nicht in der ersten Speichereinheit (2003) gespeichert ist, speichert, und
wobei die Übertragungseinheit (22) die in der zweiten Speichereinheit gespeicherte zugehörige Information den Informationsendgeräten (40) von der in der ersten Speichereinheit (2003) gespeicherten zugehörigen Information und der in der zweiten Speichereinheit gespeicherten zugehörigen Information unterscheidbar überträgt.

8. Konferenzinformationsverarbeitungsvorrichtung (20) nach Anspruch 1,
wobei die Informationsspeichereinheit (27) bestimmt, ob im Voraus gespeicherte zugehörige Information über die Informationsendgeräte die von den Informationsendgeräten (40) als Reaktion auf erfolgreiche von der Authentifizierungseinheit (24) durchgeführte Authentifizierung übertragene zugehörige Information über die Informationsendgeräte (40) umfasst, und
wobei die Kommunikationsbeschränkungseinheit (25) ohne übertragene Identifizierungsinformation eine Kommunikation, die von dem ersten der Informationsendgeräte (40) durchgeführt wurde, dessen zugehörige Information durch die Informationsspeichereinheit (27) nicht als in der im Voraus gespeicherten zugehörigen Information über die Informationsendgeräte (40) enthalten bestimmt wurde, beschränkt.

9. Verfahren zur Kommunikation in einem Kommunikationssystem, in dem Informationsendgeräte (40) in drahtloser Kommunikation mit einer Konferenzinformationsverarbeitungsvorrichtung (20) sind, um den Informationsendgeräten (40), die an einer Konferenz teilnehmen, zu erlauben, auf an der Konferenz verwendete Information zuzugreifen, wobei das Verfahren zur Kommunikation Folgendes umfasst:
ein Übertragen, durch die Informationsendgeräte (40), von Authentifizierungsinformation an die Konferenzinformationsverarbeitungsvorrichtung (20);
ein Authentifizieren der Informationsendgeräte (40) basierend auf Authentifizierungsinformation, wobei die Authentifizierungsinformation von den Informationsendgeräten (40) übertragen wird;
ein Speichern von zugehöriger Information über die Informationsendgeräte (40) in einer ersten Speichereinheit (2003), wobei die zugehörige Information von den Informationsendgeräten (40), denen es erlaubt ist, an der Konferenz teilzunehmen, als Reaktion auf erfolgreiche bei der Authentifizierung durchgeführte Authentifizierung übertragen wird;
ein Übertragen der zugehörigen Information über die Informationsendgeräte (40), die in einer ersten Speichereinheit (2003) gespeichert ist, an die erfolgreich authentifizierten Informationsendgeräte (40); und
ein Beschränken von Kommunikation, die von einem ersten Informationsendgerät (40), das durch Identifizierungsinformation angegeben wird, durchgeführt wird, wobei die Identifizierungsinformation in der zugehörigen Information enthalten ist in einem Fall, in dem die Identifizierungsinformation, die für das erste der Informationsendgeräte (40) bezeichnend ist, und eine Anforderung zur Entfernung von der Konferenz von einem zweiten der Informationsendgeräte (40) empfangen werden;
**dadurch gekennzeichnet, dass** die Kommunikationsbeschränkung ein Registrieren der Identifizierungsinformation in einer Entfernungslistendatenbank und ein Verwerfen von Kommunikationsanforderungen von dem von der Identifizierungsinformation identifizierten ersten der Informationsendgeräte (40) umfasst.

10. Kommunikationssystem (100), in dem Informationsendgeräte (40) in drahtloser Kommunikation sind mit einer Konferenzinformationsverarbeitungsvorrichtung (20), um den Informationsendgeräten (40), die an einer Konferenz teilnehmen, zu erlauben, auf an der Konferenz verwendete Information zuzugreifen, wobei das Kommunikationssystem Folgendes umfasst:
eine erste Übertragungseinheit, die konfiguriert ist, Authentifizierungsinformation an die Konferenzinformationsverarbeitungsvorrichtung zu übertragen;
eine Authentifizierungseinheit (24), die konfiguriert ist, die Informationsendgeräte (40) basierend auf Authentifizierungsinformation zu authentifizieren, wobei die Authentifizierungsinformation von den Informationsendgeräten (40) übertragen wird;
eine Informationsspeichereinheit (22), die konfiguriert ist, zugehörige Information über die Informationsendgeräte (40) in einer ersten Speichereinheit (2003) zu speichern, wobei die zugehörige Information von den Informationsendgeräten (40), denen es erlaubt ist, an der Konferenz teilzunehmen, als Reaktion auf erfolgreiche durch die Authentifizierungseinheit (24) durchgeführte Authentifizierung übertragen wird;
eine zweite Übertragungseinheit (22), die konfiguriert ist, die zugehörige Information über die Informationsendgeräte (40), die in einer ersten Speichereinheit (2003) gespeichert ist, an die von der Authentifizierungseinheit (24) erfolgreich authentifizierten Informationsendgeräte zu übertragen; und
eine Kommunikationsbeschränkungseinheit (25), die konfiguriert ist, von einem ersten Informationsendgerät (40), das durch Identifizierungsinformation angegeben wird, durchgeführte Kommunikation zu beschränken, wobei die Identifizierungsinformation in der zugehörigen Information enthalten ist in einem Fall, in dem die Identifizierungsinformation, die für das erste der Informationsendgeräte (40) bezeichnend ist, und eine Anforderung zur Entfernung von der Konferenz von einem zweiten der Informationsendgeräte (40) empfangen werden;
**dadurch gekennzeichnet, dass** die Kommunikationsbeschränkung ein Registrieren der Identifizierungsinformation in einer Entfernungslistendatenbank und ein Verwerfen von Kommunikationsanforderungen von dem von der Identifizierungsinformation identifizierten ersten der Informationsendgeräte (40) umfasst.

11. Kommunikationssystem (100) nach Anspruch 10, ferner umfassend:
eine Kommunikationssteuereinheit (23), die konfiguriert ist, eine Anforderung, eine Kommunikation zu starten, von einem dritten der Informationsendgeräte (40) zu empfangen,
wobei die Kommunikationsbeschränkungseinheit die für das erste der Informationsendgeräte (40) bezeichnende Identifizierungsinformation vom zweiten der Informationsendgeräte (40) empfängt, wobei das zweite der Informationsendgeräte (40) sich vom dritten der Informationsendgeräte (40) unterscheidet, das die Anforderung, eine Kommunikation zu starten, überträgt.

12. Kommunikationssystem (100) nach Anspruch 10, ferner umfassend:
eine Empfangseinheit (21), die konfiguriert ist, von den Informationsendgeräten (40) eine Anfrage darüber, ob eine Anzahl der Informationsendgeräte (40), die an der Konferenz teilnehmen, geändert hat, zu empfangen,
wobei in einem Fall, in dem die Anzahl der in der ersten Speichereinheit (2003) gespeicherten Informationsendgeräte (40) von einer vorhergehenden Anfrage erhöht wurde, die zweite Übertragungseinheit (22) die in der ersten Speichereinheit (2003) gespeicherte zugehörige Information zusammen mit zugehöriger Information über ein erhöhtes Informationsendgerät an die Informationsendgeräte (40), die die Anfrage senden, überträgt.

13. Kommunikationssystem (100) nach Anspruch 11,
wobei, in einem Fall, in dem die Kommunikationssteuereinheit (23) die Anforderung, eine Kommunikation zu starten, von dem dritten der Informationsendgeräte (40) empfängt, die Kommunikationssteuereinheit (23) die Authentifizierungsinformation erstellt und die Authentifizierungsinformation an das dritte der Informationsendgeräte (40), das die Anforderung, eine Kommunikation zu starten, überträgt, überträgt, und
wobei die Authentifizierungseinheit (24) die Informationsendgeräte (40), die die Authentifizierungsinformation vom dritten der Informationsendgeräte (40) empfangen, das die Anforderung, eine Kommunikation zu starten, überträgt, wobei die Authentifizierung basierend auf der Authentifizierungsinformation, die von den Informationsendgeräten (40) an die Konferenzinformationsverarbeitungsvorrichtung übertragen wurden, durchgeführt wird.

14. Kommunikationssystem (100) nach Anspruch 10,
wobei die zugehörige Information mindestens eines aus einem Benutzernamen, einer IP-Adresse, einer MAC-Adresse, einer Modellnummer, einer Telefonnummer und einer Mailadresse der Informationsendgeräte (40) umfasst, und
wobei die zweite Übertragungseinheit (22) dem von der Authentifizierungseinheit authentifizierten Informationsendgerät (40) mindestens eines aus dem Benutzernamen, der IP-Adresse, der MAC-Adresse, der Modellnummer, der Telefonnummer und der Mailadresse der Informationsendgeräte (40) überträgt.

15. Kommunikationssystem (100) nach Anspruch 10,
wobei die Informationsspeichereinheit (27) bestimmt, ob im Voraus gespeicherte zugehörige Information über die Informationsendgeräte (40) die von den Informationsendgeräten (40) als Reaktion auf erfolgreiche von der Authentifizierungseinheit (24) durchgeführte Authentifizierung übertragene zugehörige Information über die Informationsendgeräte (40) umfasst,
wobei die Informationsspeichereinheit (27) die übertragene zugehörige Information in der ersten Speichereinheit (2003) speichert, in einem Fall, in dem die im Voraus gespeicherte zugehörige Information die übertragene zugehörige Information umfasst, und die Informationsspeichereinheit (27) die übertragene zugehörige Information in einer zweiten Speichereinheit speichert, in einem Fall, in dem die im Voraus gespeicherte zugehörige Information die übertragene zugehörige Information nicht umfasst, und
wobei die zweite Übertragungseinheit (22) die in der ersten Speichereinheit (2003) gespeicherte zugehörige Information und die in der zweiten Speichereinheit gespeicherte zugehörige Information den Informationsendgeräten (40) unterscheidbar überträgt.

## Revendications

1. Appareil de traitement d'informations de conférence (20) pour communication sans fil avec des terminaux d'informations (40), l'appareil de traitement d'informations de conférence permettant aux terminaux d'informations (40) qui participent à une conférence d'accéder à des informations utilisées à la conférence, l'appareil de traitement d'informations de conférence comprenant :
une unité d'authentification (24) configurée pour authentifier les terminaux d'informations (40) sur la base d'informations d'authentification, les informations d'authentification étant transmises à partir des terminaux d'informations (40) ;
une unité de stockage d'informations (27) configurée pour stocker des informations connexes concernant les terminaux d'informations (40) dans une première unité de mémoire (2003), les informations connexes étant transmises à partir des terminaux d'informations (40) permis de participer à la conférence en réponse à une authentification réussie réalisée par l'unité d'authentification (24) ;
une unité de transmission (22) configurée pour transmettre les informations connexes concernant les terminaux d'informations (40) stockées dans la première unité de mémoire (2003) aux terminaux d'informations (40) authentifiés avec succès par l'unité d'authentification (24) ; et
une unité de limitation de communication (25) configurée pour limiter une communication réalisée par un premier des terminaux d'informations (40) indiqué par des informations d'identification, les informations d'identification étant incluses dans les informations connexes, au cas où les informations d'identification indicatives du premier des terminaux d'informations (40) et une demande de retrait, de la conférence, sont reçues d'un deuxième des terminaux d'informations (40) ;
**caractérisé en ce que** la limite de communication inclut l'enregistrement des informations d'identification dans une base de données de liste de retraits et le rejet de demandes de communication provenant du premier des terminaux d'informations (40) identifié par les informations d'identification.

2. Appareil de traitement d'informations de conférence (20) selon la revendication 1, comprenant en outre :
une unité de commande de communication (23) configurée pour recevoir une demande de commencement de communication à partir d'un troisième des terminaux d'informations (40),
dans lequel l'unité de limitation de communication (25) reçoit les informations d'identification indicatives du premier des terminaux d'informations (40) à partir du deuxième des terminaux d'informations (40), le deuxième des terminaux d'informations (40) étant différent du troisième des terminaux d'informations (40) qui transmet la demande de commencement de communication.

3. Appareil de traitement d'informations de conférence (20) selon la revendication 1, comprenant en outre :
une unité de réception (21) configurée pour recevoir, à partir des terminaux d'informations (40), une interrogation concernant le fait qu'un nombre des terminaux d'informations (40) participant à la conférence a changé ou n'a pas changé,
dans lequel au cas où le nombre des terminaux d'informations (40) stocké dans la première unité de mémoire (2003) a augmenté par rapport à une interrogation précédente, l'unité de transmission (22) transmet les informations connexes stockées dans la première unité de mémoire (2003), conjointement avec des informations connexes concernant un terminal d'informations additionnel, aux terminaux d'informations (40) qui envoient l'interrogation.

4. Appareil de traitement d'informations de conférence (20) selon la revendication 2,
dans lequel au cas où l'unité de commande de communication (23) reçoit la demande de commencement de communication à partir du troisième des terminaux d'informations (40), l'unité de commande de communication (23) crée les informations d'authentification et transmet les informations d'authentification au troisième des terminaux d'informations (40) qui transmet la demande de commencement de communication, et
dans lequel l'unité d'authentification (24) authentifie les terminaux d'informations (40) qui reçoivent les informations d'authentification à partir du troisième des terminaux d'informations (40) qui transmet la demande de commencement de communication, l'authentification étant réalisée sur la base des informations d'authentification transmises par les terminaux d'informations (40) à l'appareil de traitement d'informations de conférence.

5. Appareil de traitement d'informations de conférence (20) selon la revendication 1,
dans lequel les informations connexes incluent au moins l'un parmi un nom d'utilisateur, une adresse IP, une adresse MAC, un numéro de modèle, un numéro de téléphone, et une adresse postale des terminaux d'informations (40), et
dans lequel l'unité de transmission (22) transmet, aux terminaux d'informations (40) authentifiés par l'unité d'authentification (24), au moins l'un parmi le nom d'utilisateur, l'adresse IP, l'adresse MAC, le numéro de modèle, le numéro de téléphone, et l'adresse postale des terminaux d'informations.

6. Appareil de traitement d'informations de conférence (20) selon la revendication 1,
dans lequel l'unité de stockage d'informations (27) détermine que des informations connexes concernant les terminaux d'informations (40) stockées d'avance incluent, ou n'incluent pas, les informations connexes concernant les terminaux d'informations (40) transmises à partir des terminaux d'informations (40) en réponse à une authentification réussie réalisée par l'unité d'authentification (24),
dans lequel l'unité de stockage d'informations (27) stocke les informations connexes transmises dans la première unité de mémoire (2003) au cas où les informations connexes stockées d'avance incluent les informations connexes transmises, et l'unité de stockage d'informations (27) stocke les informations connexes transmises dans une deuxième unité de mémoire au cas où les informations connexes stockées d'avance n'incluent pas les informations connexes transmises, et
dans lequel l'unité de transmission (22) transmet de façon distincte les informations connexes stockées dans la première unité de mémoire (2003) et les informations connexes stockées dans la deuxième unité de mémoire aux terminaux d'informations (40).

7. Appareil de traitement d'informations de conférence (20) selon la revendication 6,
dans lequel l'unité de stockage d'informations stocke (27), dans une troisième unité de mémoire, les informations connexes transmises concernant les terminaux d'informations (40) qui sont incluses dans les informations connexes concernant les terminaux d'informations stockées d'avance mais ne sont pas stockées dans la première unité de mémoire (2003), et
dans lequel l'unité de transmission (22) transmet les informations connexes stockées dans la troisième unité de mémoire aux terminaux d'informations (40) de façon distincte des informations connexes stockées dans la première unité de mémoire (2003) et des informations connexes stockées dans la deuxième unité de mémoire.

8. Appareil de traitement d'informations de conférence (20) selon la revendication 1,
dans lequel l'unité de stockage d'informations (27) détermine que des informations connexes concernant les terminaux d'informations stockées d'avance incluent, ou n'incluent pas, les informations connexes concernant les terminaux d'informations (40) transmises à partir des terminaux d'informations (40) en réponse à une authentification réussie réalisée par l'unité d'authentification (24), et
dans lequel l'unité de limitation de communication (25) limite, sans informations d'identification transmises, la communication réalisée par le premier des terminaux d'informations (40) dont les informations connexes ne sont pas déterminées par l'unité de stockage d'informations (27) comme étant incluses dans les informations connexes concernant les terminaux d'informations (40) stockées d'avance.

9. Procédé pour communication dans un système de communication dans lequel des terminaux d'informations (40) sont en communication sans fil avec un appareil de traitement d'informations de conférence (20) pour permettre aux terminaux d'informations (40) qui participent à une conférence d'accéder à des informations utilisées à la conférence, le procédé pour communication comprenant :
la transmission, par les terminaux d'informations (40), d'informations d'authentification à l'appareil de traitement d'informations de conférence (20) ;
l'authentification des terminaux d'informations (40) sur la base d'informations d'authentification, les informations d'authentification étant transmises à partir des terminaux d'informations (40) ;
le stockage des informations connexes concernant les terminaux d'informations (40) dans une première unité de mémoire (2003), les informations connexes étant transmises à partir des terminaux d'informations (40) permis de participer à la conférence en réponse à une authentification réussie réalisée dans l'authentification ;
la transmission des informations connexes concernant les terminaux d'informations (40) stockées dans la première unité de mémoire (2003) aux terminaux d'informations (40) authentifiés avec succès ; et
la limitation de communication réalisée par un premier des terminaux d'informations (40) indiqué par des informations d'identification, les informations d'identification étant incluses dans les informations connexes, au cas où les informations d'identification indicatives du premier des terminaux d'informations (40) et une demande de retrait, de la conférence, sont reçues d'un deuxième des terminaux d'informations (40) ;
**caractérisé en ce que** la limite de communication inclut l'enregistrement des informations d'identification dans une base de données de liste de retraits et le rejet de demandes de communication provenant du premier des terminaux d'informations (40) identifié par les informations d'identification.

10. Système de communication (100) dans lequel des terminaux d'informations (40) sont en communication sans fil avec un appareil de traitement d'informations de conférence (20) pour permettre aux terminaux d'informations (40) qui participent à une conférence d'accéder à des informations utilisées à la conférence, le système de communication comprenant :
une première unité de transmission configurée pour transmettre des informations d'authentification à l'appareil de traitement d'informations de conférence ;
une unité d'authentification (24) configurée pour authentifier les terminaux d'informations (40) sur la base d'informations d'authentification, les informations d'authentification étant transmises à partir des terminaux d'informations (40) ;
une unité de stockage d'informations (22) configurée pour stocker des informations connexes concernant les terminaux d'informations (40) dans une première unité de mémoire (2003), les informations connexes étant transmises à partir des terminaux d'informations (40) permis de participer à la conférence en réponse à une authentification réussie réalisée par l'unité d'authentification (24) ;
une seconde unité de transmission (22) configurée pour transmettre les informations connexes concernant les terminaux d'informations (40) stockées dans la première unité de mémoire (2003) aux terminaux d'informations authentifiés avec succès par l'unité d'authentification (24) ; et
une unité de limitation de communication (25) configurée pour limiter une communication réalisée par un premier des terminaux d'informations (40) indiqué par des informations d'identification, les informations d'identification étant incluses dans les informations connexes, au cas où les informations d'identification indicatives du premier des terminaux d'informations (40) et une demande de retrait, de la conférence, sont reçues d'un deuxième des terminaux d'informations (40) ;
**caractérisé en ce que** la limite de communication inclut l'enregistrement des informations d'identification dans une base de données de liste de retraits et le rejet de demandes de communication provenant du premier des terminaux d'informations (40) identifié par les informations d'identification.

11. Système de communication (100) selon la revendication 10, comprenant en outre :
une unité de commande de communication (23) configurée pour recevoir une demande de commencement de communication à partir d'un troisième des terminaux d'informations (40),
dans lequel l'unité de limitation de communication reçoit les informations d'identification indicatives du premier des terminaux d'informations (40) à partir du deuxième des terminaux d'informations (40), le deuxième des terminaux d'informations (40) étant différent du troisième des terminaux d'informations (40) qui transmet la demande de commencement de communication.

12. Système de communication (100) selon la revendication 10, comprenant en outre :
une unité de réception (21) configurée pour recevoir, à partir des terminaux d'informations (40), une interrogation concernant le fait qu'un nombre des terminaux d'informations (40) participant à la conférence a changé ou n'a pas changé,
dans lequel au cas où le nombre des terminaux d'informations (40) stocké dans la première unité de mémoire (2003) a augmenté par rapport à une interrogation précédente, la seconde unité de transmission (22) transmet les informations connexes stockées dans la première unité de mémoire (2003), conjointement avec des informations connexes concernant un terminal d'informations additionnel, aux terminaux d'informations (40) qui envoient l'interrogation.

13. Système de communication (100) selon la revendication 11,
dans lequel au cas où l'unité de commande de communication (23) reçoit la demande de commencement de communication à partir du troisième des terminaux d'informations (40), l'unité de commande de communication (23) crée les informations d'authentification et transmet les informations d'authentification au troisième des terminaux d'informations (40) qui transmet la demande de commencement de communication, et
dans lequel l'unité d'authentification (24) authentifie les terminaux d'informations (40) qui reçoivent les informations d'authentification à partir du troisième des terminaux d'informations (40) qui transmet la demande de commencement de communication, l'authentification étant réalisée sur la base des informations d'authentification transmises par les terminaux d'informations (40) à l'appareil de traitement d'informations de conférence.

14. Système de communication (100) selon la revendication 10,
dans lequel les informations connexes incluent au moins l'un parmi un nom d'utilisateur, une adresse IP, une adresse MAC, un numéro de modèle, un numéro de téléphone, et une adresse postale des terminaux d'informations (40), et
dans lequel la seconde unité de transmission (22) transmet, aux terminaux d'informations (40) authentifiés par l'unité d'authentification, au moins l'un parmi le nom d'utilisateur, l'adresse IP, l'adresse MAC, le numéro de modèle, le numéro de téléphone, et l'adresse postale des terminaux d'informations (40).

15. Système de communication (100) selon la revendication 10,
dans lequel l'unité de stockage d'informations (27) détermine que des informations connexes concernant les terminaux d'informations (40) stockées d'avance incluent, ou n'incluent pas, les informations connexes concernant les terminaux d'informations (40) transmises à partir des terminaux d'informations (40) en réponse à une authentification réussie réalisée par l'unité d'authentification (24),
dans lequel l'unité de stockage d'informations (27) stocke les informations connexes transmises dans la première unité de mémoire (2003) au cas où les informations connexes stockées d'avance incluent les informations connexes transmises, et l'unité de stockage d'informations (27) stocke les informations connexes transmises dans une deuxième unité de mémoire au cas où les informations connexes stockées d'avance n'incluent pas les informations connexes transmises, et
dans lequel la seconde unité de transmission (22) transmet de façon distincte les informations connexes stockées dans la première unité de mémoire (2003) et les informations connexes stockées dans la deuxième unité de mémoire aux terminaux d'informations (40).
